# EUROPEAN PATENT SPECIFICATION

(11) **EP 4 612 847 B1**
(45) Date of publication and mention of the grant of the patent: **08.07.2026**
(21) Application number: 22809847.1
(22) Date of filing: 01.11.2022
(51) Int. Cl.: H04L 9/40, H04L 41/0803, H04L 61/00, H04W 12/069, H04W 4/70

(54) **SECURE MANAGEMENT OF PERSONAL IOT NETWORKS (PINS)**
SICHERE VERWALTUNG VON PERSÖNLICHEN IOT-NETZWERKEN (PINS)
GESTION SÉCURISÉE DE RÉSEAUX IOT PERSONNELS (PIN)

(43) Date of publication of application: 10.09.2025
(73) Proprietor: Telefonaktiebolaget LM Ericsson (publ), 164 83 Stockholm (SE)
(72) Inventor: NORMANN, Henrik, 215 68 Malmö (SE); FLYGARE, Helena, 217 55 Malmö (SE)
(74) Representative: Murgitroyd & Company
(86) International application number: PCT/EP2022/080400
(87) International publication number: WO 2024/094289

(56) References cited:
- WO-A1-2022/159725
- 3RD GENERATION PARTNERSHIP PROJECT: "Study on personal IoT networks security aspects (Release 18)", 24 October 2022 (2022-10-24), XP052211756, Retrieved from the Internet <URL:https://ftp.3gpp.org/Specs/archive/33_series/33.882/33882-030.zip 33882-030.docx> [retrieved on 20221024]
- 3RD GENERATION PARTNERSHIP PROJECT (3GPP): "Study on architecture enhancements for Personal IoT Network (PIN) (Release 18)", 21 October 2022 (2022-10-21), XP052211639, Retrieved from the Internet <URL:https://ftp.3gpp.org/Specs/archive/23_series/23.700-88/23700-88-110.zip 23700-88-110_MCCclean.docx> [retrieved on 20221021]

## Description

### TECHNICAL FIELD

The present disclosure relates generally to the field of communication networks, and more specifically to security of personal Internet-of-Things (IoT) networks.

### BACKGROUND

Currently the fifth generation ("5G") of cellular systems, also referred to as New Radio (NR), is being standardized within the Third-Generation Partnership Project (3GPP). NR is developed for maximum flexibility to support multiple and substantially different use cases. These include enhanced mobile broadband (eMBB), machine type communications (MTC), ultra-reliable low latency communications (URLLC), side-link device-to-device (D2D), and several other use cases. 5G/NR was first specified in Release 15 (Rel-15) and continues to evolve through subsequent releases.

At a high level, the 5G System (5GS) consists of an Access Network (AN) and a Core Network (CN). The AN provides user equipment (UEs) connectivity to the CN, e.g., via base stations such as gNBs or ng-eNBs. The 5G CN (also called "5GC") includes a variety of Network Functions (NF) that provide a wide range of different functionalities such as session management, connection management, charging, authentication, etc.

3GPP TS 33.501 describes security capabilities of the 5GS. One important security feature is the primary authentication, which facilitates mutual authentication between a UE and a 5G network. In particular, primary authentication establishes a security key (Kausf) only available in the UE and in an authentication server NF (AUSF) in the 5GC.

Internet of Things (IoT) describes the network of physical objects-"things"-that are embedded with sensors, software, and other technologies for the purpose of connecting and exchanging data with other devices and systems over the internet. These devices range from ordinary household objects to sophisticated industrial tools. By using technologies such as low-cost computing, wireless communications, cloud computing, big data, and analytics, IoT devices can collect and share data with minimal human intervention. With more than 7 billion connected IoT devices today, experts are expecting this number to grow to 10 billion by 2020 and 22 billion by 2025.

3GPP is currently studying Personal IoT Networks (PINs) as part of Rel-18. 3GPP TR 23.700-88 (v1.0.0) study on architecture enhancements for PINs contains various proposals on architecture needed in order for the 5GC to support PINs. 3GPP TR 23.700-88 (v1.0.0) also includes the following definitions of various terms associated with PINs:
- Personal IoT Network (PIN): A configured and managed group of PIN Elements that can communicate with each other directly or via PIN Elements with Gateway Capability (PEGC), and with a 5G network via at least one PEGC. A PIN is managed by at least one PIN Element with Management Capability (PEMC).
- PIN Element (PINE): A UE capable of 3GPP access or non-3GPP device that can communicate within a PIN (e.g., via PIN direct connection, via PEGC, or via PEGC and 5GC) and/or from outside the PIN via a PEGC and 5GC.
- PINE with Gateway Capability (PEGC): A PIN Element with the ability to provide connectivity to and from the 5G network for other PIN Elements, or to provide relay for the communication between PIN Elements.
- PINE with Management Capability (PEMC): A PIN Element with capability to manage the PIN.

Although defined separately above, a PINE can have both management and gateway capability, i.e., the same PINE can be both PEGC and PEMC for a PIN.

### SUMMARY

3GPP recently initiated a study on security for PINs, as further described in 3GPP TR 33.882 (v0.2.0). Currently, this document includes the following potential security requirements for PINEs: 1) a PINE in a Personal IoT network should be authenticated; and 2) a PINE in a Personal IoT network should be authorized.

As mentioned above, however, not all PINEs are UEs with capability to connect to a 3GPP AN. Moreover, PINEs without this capability are unable perform primary authentication via AUSF in 5GC. As such, there currently is no mechanism to authenticate PINEs without 3GPP access capability towards the 5GC. Thus, unauthenticated PINEs must be allowed or permitted to join a PIN, which can lead to problems of admitting rogue PINEs that are security risks or keeping out valid PINEs that need to be admitted, respectively.

Accordingly, embodiments of the present disclosure address these and other problems, issues, and/or difficulties related to security, thereby enabling the otherwise-advantageous deployment of PINs in relation to a 5G network.

Some embodiments of the present disclosure include methods (*e.g.,* procedures) for an application server (AS) for PINs.

These exemplary methods can include receiving, from a UE via a communication network, a request to modify a PIN. The UE is configured as a PIN element with management capabilities (PEMC UE). The request includes a unique identifier of a PIN element (PINE) and an indication of a PIN modification type. The unique identifier is based on the following: a first identifier of the PINE (PINE_ID), an identifier of the PIN (PIN_ID), and a security key known by the PEMC UE and an authentication server function (AUSF) of the communication network. These exemplary methods can also include sending, to an interface function of the communication network, an authorization request that includes the unique identifier and a subscription identifier associated with the PEMC's subscription to the communication network.

In some embodiments, the security key is known only by the PEMC UE and the AUSF.

In some embodiments, the unique identifier of the PINE comprises a message authentication code calculated using PINE_ID, PIN_ID, and the security key as inputs. In some embodiments, the communication network is a 5GC and the security key is Kausf.

In some embodiments, these exemplary methods can also include receiving, from the interface function, an authorization response indicating the following: whether PINE_ID corresponds to a legitimate PINE, and whether the PEMC UE is authorized to modify the PIN in accordance with the request to modify. In such embodiments, these exemplary methods can also include selectively modifying the PIN in accordance with the request to modify and the authorization response.

Other embodiments include complementary methods (*e.g.,* procedures) for an AUSF of a communication network (e.g., 5GC) to support management of PINs.

These exemplary methods can include receiving, from an interface function of the communication network, a verification request related to a request to modify a PIN by a UE configured as a PEMC UE. The verification request includes a unique identifier of a PINE to be added or removed from the PIN, and a subscription identifier associated with the PEMC's subscription to the communication network. The unique identifier of the PINE comprises a message authentication code (keyedMAC) calculated by the PEMC UE.

These exemplary methods can also include calculating a further message authentication code (MAC) based on the security key and determining a verification result based on the further MAC, the unique identifier, and the subscription identifier. Specifically, the verification result indicates the following: whether a first identifier included in the unique identifier corresponds to a legitimate PINE, and whether the PEMC UE is authorized to modify the PIN in accordance with the request to modify.

In some embodiments, the communication network is a 5GC and the security key is Kausf.

Other embodiments include complementary methods (*e.g.,* procedures) for a UE configured with management capabilities for a PIN (e.g., PEMC UE).

These exemplary methods can include calculate a unique identifier for a PINE to be added to or removed from the PIN. The unique identifier is calculated based on a first identifier of the PINE (PINE_ID), an identifier of the PIN (PIN_ID), and a security key known by the PEMC UE and an AUSF of a communication network. These exemplary methods can also include sending a request to modify the PIN to a PIN AS via the communication network. The request includes the unique identifier of the PINE and an indication of a PIN modification type, which is one of adding or removing the PINE.

In some embodiments, the security key is known only by the PEMC UE and the AUSF.

In some embodiments, the unique identifier of the PINE comprises a message authentication code calculated using PINE_ID, PIN_ID, and the security key as inputs. In some embodiments, the communication network is a 5GC and the security key is Kausf.

Other embodiments include complementary methods (*e.g.,* procedures) for an interface function (e.g., NEF, CAPIF) of a communication network (e.g., 5GC) to support management of PINs.

These exemplary methods can include receiving, from a PIN AS, an authorization request related to a request to modify a PIN by a UE configured as a PEMC UE. The authorization request includes the following: a unique identifier of a PINE to be added or removed from the PIN, and a subscription identifier associated with the PEMC's subscription to the communication network. The unique identifier is based on a first identifier of the PINE (PINE_ID), an identifier of the PIN (PIN_ID), and a security key known by the PEMC UE and an AUSF of the communication network. These exemplary methods can also include sending, to the AUSF, a verification request that includes the unique identifier of the PINE and the subscription identifier of the PEMC.

In some embodiments, the security key is only known by the PEMC UE and the AUSF.

In some embodiments, these exemplary methods can also include receiving from the AUSF a verification result that indicates the following: whether the PINE_ID is associated with a legitimate PINE, and whether the PEMC UE is authorized to modify the PIN in accordance with the request to modify. In such embodiments, these exemplary methods can also include sending to the PIN AS an authorization response that includes the verification result.

In some embodiments, the unique identifier of the PINE comprises a message authentication code calculated using PINE_ID, PIN_ID, and the security key as inputs. In some embodiments, the communication network is a 5GC, the security key is Kausf, and the interface function is a network exposure function (NEF) or a common API interface function (CAPIF).

Other embodiments include PEMC UEs as well as PIN AS's, AUSFs, and interface functions (or network nodes or computing systems hosting the same) that are configured to perform operations corresponding to any of the exemplary methods described herein. Other embodiments include non-transitory, computer-readable media storing computer-executable instructions that, when executed by processing circuitry, configure such PEMC UEs, PIN AS's, AUSFs, and interface functions to perform operations corresponding to any of the exemplary methods described herein.

These and other embodiments described herein can add an extra layer of security to PINs, especially for PINs in which the PIN AS is external to 5GC and operated by an external party. The PIN AS can communicate with 5GC (e.g., AUSF) to verify that a PEMC UE trying to add (or remove) an identified PINE to (from) a PIN is in fact an authorized PEMC for the PIN. The PIN AS can communicate with 5GC via existing interfaces, e.g., via NEF or CAPIF. More generally, embodiments facilitate secure deployment of PINs in conjunction with 5G networks.

These and other objects, features, and advantages of the present disclosure will become apparent upon reading the following Detailed Description in view of the Drawings briefly described below.

### BRIEF DESCRIPTION OF THE DRAWINGS

Figures 1-2 illustrate various aspects of an exemplary 5G network architecture.
Figure 3 shows an exemplary configuration of the 5G service-based architecture (SBA) for a Generic Bootstrapping Architecture (GBA).
Figure 4 shows a hierarchy of security keys used in a 5G system.
Figure 5 shows an exemplary architecture for support of PINs in use with a 5G system.
Figure 6 shows a signaling diagram for a procedure for authorization to add a PINE to a PIN, according to various embodiments of the present disclosure.
Figure 7 shows an example arrangement for using 5G Internal Group Identifiers for PINs.
Figure 8 shows an exemplary method (*e.g.,* procedure) for a PIN application server, according to various embodiments of the present disclosure.
Figure 9 shows an exemplary method (*e.g.,* procedure) for an authentication server function (AUSF) of a communication network, according to various embodiments of the present disclosure.
Figure 10 shows an exemplary method (*e.g.,* procedure) for a UE configured with management capabilities for a PIN, according to various embodiments of the present disclosure.
Figure 11 shows an exemplary method (*e.g.,* procedure) for an interface function of a communication network, according to various embodiments of the present disclosure.
Figure 12 shows a communication system according to various embodiments of the present disclosure.
Figure 13 shows a UE according to various embodiments of the present disclosure.
Figure 14 shows a network node according to various embodiments of the present disclosure.
Figure 15 shows host computing system according to various embodiments of the present disclosure.
Figure 16 is a block diagram of a virtualization environment in which functions implemented by some embodiments of the present disclosure may be virtualized.

### DETAILED DESCRIPTION

Embodiments briefly summarized above will now be described more fully with reference to the accompanying drawings. These descriptions are provided by way of example to explain the subject matter to those skilled in the art and should not be construed as limiting the scope of the subject matter to only the embodiments described herein. More specifically, examples are provided below that illustrate the operation of various embodiments according to the advantages discussed above.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods and/or procedures disclosed herein do not have to be performed in the exact order disclosed, unless a step is explicitly described as following or preceding another step and/or where it is implicit that a step must follow or precede another step. Any feature of any of the embodiments disclosed herein can be applied to any other embodiment, wherever appropriate. Likewise, any advantage of any of the embodiments can apply to any other embodiments, and vice versa. Other objects, features, and advantages of the disclosed embodiments will be apparent from the following description.

Furthermore, the following terms are used throughout the description given below:
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station (*e.g.,* a gNB in a 3GPP 5G/NR network or an eNB in a 3GPP LTE network), base station distributed components (*e.g.,* CU and DU), a high-power or macro base station, a low-power base station (*e.g.,* micro, pico, femto, or home base station, or the like), an integrated access backhaul (IAB) node (or component thereof such as MT or DU), a transmission point, a remote radio unit (RRU or RRH), and a relay node.
- Core Network Node: As used herein, a "core network node" is any type of node in a core network. Some examples of a core network node include, *e.g.,* a Mobility Management Entity (MME), a serving gateway (SGW), a Packet Data Network Gateway (P-GW), etc. A core network node can also be a node that implements a particular core network function (NF), such as an access and mobility management function (AMF), a session management function (AMF), a user plane function (UPF), a Service Capability Exposure Function (SCEF), or the like.
- Wireless Device: As used herein, a "wireless device" (or "WD" for short) is any type of device that is capable, configured, arranged and/or operable to communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Unless otherwise noted, the term "wireless device" is used interchangeably herein with the term "user equipment" (or "UE" for short), with both of these terms having a different meaning than the term "network node".
- Radio Node: As used herein, a "radio node" can be either a "radio access node" (or equivalent term) or a "wireless device."
- Network Node: As used herein, a "network node" is any node that is either part of the radio access network (*e.g.,* a radio access node or equivalent term) or of the core network (*e.g.,* a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g.,* administration) in the cellular communications network.
- Node: As used herein, the term "node" (without prefix) can be any type of node that is capable of operating in or with a wireless network (including RAN and/or core network), including a radio access node (or equivalent term), core network node, or wireless device.

Note that the description given herein focuses on a 3GPP cellular communications system and, as such, 3GPP terminology or terminology similar to 3GPP terminology is generally used. However, the concepts disclosed herein are not limited to a 3GPP system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from the concepts, principles, and/or embodiments described herein.

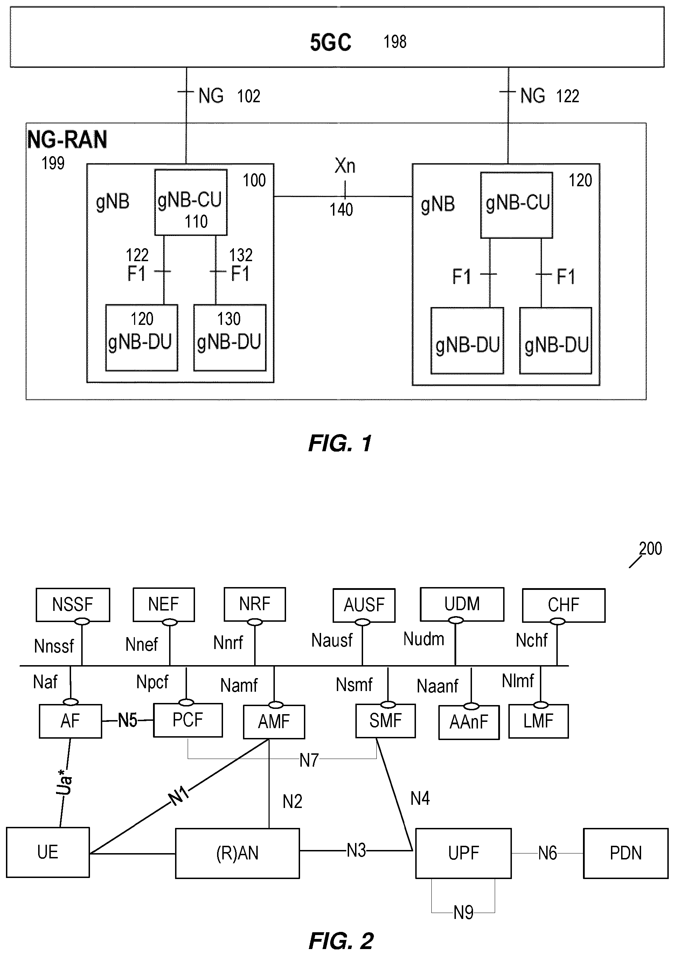

Figure 1 illustrates a high-level view of an exemplary 5G network architecture, consisting of a Next Generation RAN (NG-RAN) 199 and a 5G Core (5GC) 198. NG-RAN 199 can include one or more gNodeB's (gNBs) connected to the 5GC via one or more NG interfaces, such as gNBs 100, 150 connected via interfaces 102, 152, respectively. More specifically, gNBs 100, 150 can be connected to one or more Access and Mobility Management Functions (AMFs) in the 5GC 198 via respective NG-C interfaces. Similarly, gNBs 100, 150 can be connected to one or more User Plane Functions (UPFs) in 5GC 198 via respective NG-U interfaces. Various other network functions (NFs) can be included in the 5GC 198, as described in more detail below.

In addition, the gNBs can be connected to each other via one or more Xn interfaces, such as Xn interface 140 between gNBs 100 and 150. The radio technology for the NG-RAN is often referred to as "New Radio" (NR). With respect the NR interface to UEs, each of the gNBs can support frequency division duplexing (FDD), time division duplexing (TDD), or a combination thereof. Each of the gNBs can serve a geographic coverage area including one or more cells and, in some cases, can also use various directional beams to provide coverage in the respective cells.

NG-RAN 199 is layered into a Radio Network Layer (RNL) and a Transport Network Layer (TNL). The NG-RAN architecture, *i.e.,* the NG-RAN logical nodes and interfaces between them, is defined as part of the RNL. For each NG-RAN interface (NG, Xn, F1) the related TNL protocol and the functionality are specified. The TNL provides services for user plane transport and signaling transport.

The NG RAN logical nodes shown in Figure 1 include a Central Unit (CU or gNB-CU) and one or more Distributed Units (DU or gNB-DU). For example, gNB 100 includes gNB-CU 110 and gNB-DUs 120 and 130. CUs (*e.g.,* gNB-CU 110) are logical nodes that host higher-layer protocols and perform various gNB functions such controlling the operation of DUs. A DU (*e.g.,* gNB-DUs 120, 130) is a decentralized logical node that hosts lower layer protocols and can include, depending on the functional split option, various subsets of the gNB functions. As such, each of the CUs and DUs can include various circuitry needed to perform their respective functions, including processing circuitry, transceiver circuitry (*e.g.,* for communication), and power supply circuitry.

A gNB-CU connects to one or more gNB-DUs over respective F1 logical interfaces, such as interfaces 122 and 132 shown in Figure 1. However, a gNB-DU can be connected to only a single gNB-CU. The gNB-CU and connected gNB-DU(s) are only visible to other gNBs and the 5GC as a gNB. In other words, the F1 interface is not visible beyond gNB-CU.

Another change in 5G networks (e.g., in 5GC) is that traditional peer-to-peer interfaces and protocols found in earlier-generation networks are modified and/or replaced by a Service Based Architecture (SBA) in which Network Functions (NFs) provide one or more services to one or more service consumers. This can be done, for example, by Hyper Text Transfer Protocol/Representational State Transfer (HTTP/REST) application programming interfaces (APIs). Furthermore, the services are composed of various "service operations", which are more granular divisions of the overall service functionality. The interactions between service consumers and producers can be of the type "request/response" or "subscribe/notify".

Figure 2 shows an exemplary non-roaming reference architecture for 5GC (200) with service-based interfaces and various 3GPP-defined NFs within the Control Plane (CP), including the following NFs:
- Application Function (AF, with Naf interface) interacts with the 5GC to provision information to the network operator and to subscribe to certain events happening in operator's network. An AF offers applications for which service is delivered in a different layer (i.e., transport layer) than the one in which the service has been requested (i.e., signaling layer), the control of flow resources according to what has been negotiated with the network. An AF communicates dynamic session information to PCF (via N5 interface), including description of media to be delivered by transport layer.
- Policy Control Function (PCF, with Npcf interface) supports unified policy framework to govern the network behavior, via providing PCC rules (e.g., on the treatment of each service data flow that is under PCC control) to the SMF via the N7 reference point. PCF provides policy control decisions and flow based charging control, including service data flow detection, gating, QoS, and flow-based charging (except credit management) towards the SMF. The PCF receives session and media related information from the AF and informs the AF of traffic (or user) plane events.

- User Plane Function (UPF)- supports handling of user plane traffic based on the rules received from SMF, including packet inspection and different enforcement actions (e.g., event detection and reporting). UPFs communicate with the RAN (e.g., NG-RNA) via the N3 reference point, with SMFs (discussed below) via the N4 reference point, and with an external packet data network (PDN) via the N6 reference point. The N9 reference point is for communication between two UPFs.
   - Session Management Function (SMF, with Nsmf interface) interacts with the decoupled traffic (or user) plane, including creating, updating, and removing Protocol Data Unit (PDU) sessions and managing session context with the User Plane Function (UPF), e.g., for event reporting. For example, SMF performs data flow detection (based on filter definitions included in PCC rules), online and offline charging interactions, and policy enforcement.
   - Charging Function (CHF, with Nchf interface) is responsible for converged online charging and offline charging functionalities. It provides quota management (for online charging), re-authorization triggers, rating conditions, etc. and is notified about usage reports from the SMF. Quota management involves granting a specific number of units (e.g., bytes, seconds) for a service. CHF also interacts with billing systems.
- Access and Mobility Management Function (AMF, with Namf interface) terminates the RAN CP interface and handles all mobility and connection management of UEs (similar to MME in EPC). AMFs communicate with UEs via the N1 reference point and with the RAN (e.g., NG-RAN) via the N2 reference point.
   - Network Exposure Function (NEF) with Nnef interface - acts as the entry point into operator's network, by securely exposing to AFs the network capabilities and events provided by 3GPP NFs and by providing ways for the AF to securely provide information to 3GPP network. For example, NEF provides a service that allows an AF to provision specific subscription data (e.g., expected UE behavior) for various UEs.
   - Network Repository Function (NRF) with Nnrf interface - provides service registration and discovery, enabling NFs to identify appropriate services available from other NFs.
   - Network Slice Selection Function (NSSF) with Nnssf interface - a "network slice" is a logical partition of a 5G network that provides specific network capabilities and characteristics, e.g., in support of a particular service. A network slice instance is a set of NF instances and the required network resources (e.g., compute, storage, communication) that provide the capabilities and characteristics of the network slice. The NSSF enables other NFs (e.g., AMF) to identify a network slice instance that is appropriate for a UE's desired service.
   - Authentication Server Function (AUSF) with Nausf interface - based in a user's home network (HPLMN), it performs user authentication and computes security key materials for various purposes.
   - Location Management Function (LMF) with Nlmf interface - supports various functions related to determination of UE locations, including location determination for a UE and obtaining any of the following: DL location measurements or a location estimate from the UE; UL location measurements from the NG RAN; and non-UE associated assistance data from the NG RAN.
   - Unified Data Management (UDM) function with Nudm interface - supports generation of 3GPP authentication credentials, user identification handling, access authorization based on subscription data, and other subscriber-related functions. To provide this functionality, the UDM uses subscription data (including authentication data) stored in the 5GC unified data repository (UDR), which also supports storage and retrieval of policy data by the PCF, as well as storage and retrieval of application data by NEF.

Although not shown in Figure 2, an Unstructured Data Storage Function (UDSF) is used to store dynamic state data, such as UE connection-related context information. For example, UE context information can be stored in a central UDSF and multiple AMFs can reach this information to facilitate seamless continuity of services in case of serving AMF outage. Network functions may have their own UDSF or it can be common. Note that "unstructured data" refers to data having structure that is not defined in 3GPP specifications. In contrast, UDR may be used to store "structured data."

The Generic Bootstrapping Architecture (GBA) was originally specified in Rel-15 and is further defined in 3GPP TS 33.220 (v17.2.0). GBA enables authentication of a user who has a valid identity (e.g., subscription credentials) on a Home Location Register (HLR) or a Home Subscriber Server (HSS) of an earlier-generation core network, such as a 4G Evolved Packet Core (EPC). The authentication is based on a shared secret, stored both in the user's SIM card (e.g., in the user equipment, UE) and at the HLR/HSS. More specifically, a network component challenges the UE's SIM card and verifies that the provided answer matches the one predicted by HLR/HSS.

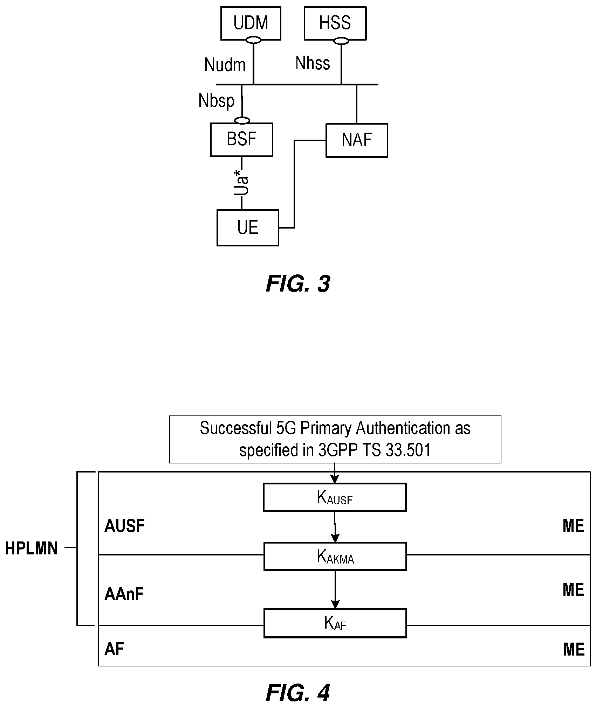

Figure 3 shows an exemplary configuration of the SBA for GBA. In addition to the HSS and the UE, Figure 3 shows the UDM and UDR of the 5GC, described briefly above. Figure 3 also shows a bootstrapping server function (BSF) with Nbsp interface and a network applications function (NAF). Mutual authentication is performed between UE and BSF, with bootstrapping key material also being derived between UE and BSF. The BSF also generates a B-TID (Bootstrapping Transaction Identifier) for each bootstrapping transaction that derives GBA key material. The bootstrapped GBA key material is then used for secure access by the UE to the NAF, which is an implementation server.

When the UE initiates communication with NAF, it includes B-TID in the message. NAF then requests an application-specific key from BSF using Nbsp interface based on inputs of B-TID and an NAF identifier. BSF locates GBA key material corresponding to B-TID, derives the application-specific key, and provides it to the NAF. Secured communication between UE and NAF is then established based on the application-specific key.

3GPP Rel-16 introduced a new feature called authentication and key management for applications (AKMA) that is based on 3GPP user credentials in 5G, including the Internet of Things (IoT) use case. More specifically, AKMA leverages the user's AKA (Authentication and Key Agreement) credentials to bootstrap security between the UE and an application function (AF), which allows the UE to securely exchange data with an application server. The AKMA architecture is an evolution of GBA and is further specified in 3GPP TS 33.535 (v17.4.0).

In addition to the NEF, AUSF, and AF shown in Figure 2 and described above, Rel-16 AKMA also utilizes an anchor function for authentication and key management for applications (AAnF). This function is shown in Figure 2 with Naanf interface. In general, AAnF interacts with AUSFs and maintains UE AKMA contexts to be used for subsequent bootstrapping requests, e.g., by application functions. At a high level, AAnF is similar to the BSF defined for GBA.

In general, security mechanisms for various 5GS protocols rely on multiple security keys. 3GPP TS 33.501 (v17.7.0) specifies these keys in an organized hierarchy shown in Figure 4. At the top is the long-term key part of the authentication credential and stored in the SIM card on the UE side and in the UDM/ARPF in the user's HPLMN.

A successful Primary Authentication run between the UE and the AUSF in the HPLMN leads to the establishment of K_{AUSF}, the second level key in the hierarchy. This key is not intended to leave the HPLMN and is used to secure the exchange of information between UE and HPLMN, such as for the provisioning of parameters to the UE from UDM in HPLMN. More precisely, K_{AUSF} is used for integrity protection of messages delivered from HPLMN to UE. As described in 3GPP TS 33.501 (v17.7.0), such features include the Steering of Roaming (SoR) and the UDM parameter delivery procedures.

K_{AUSF} is used to derive another key, K_{SEAF}, that is sent to the serving PLMN. This key is then used by the serving PLMN to derive subsequent NAS and AS protection keys. These lower-level keys together with other security parameters (e.g., cryptographic algorithms, UE security capabilities, value of counters used for replay protection in various protocols, etc.) constitute the 5G security context as defined in 3GPP TS 33.501. However, K_{AUSF} is not part of the UE's 5G security context that resides in the UE's serving PLMN. Rather, K_{AUSF} is only available in the UE and in AUSF in the HPLMN.

K_{AUSF} is also used by the network and the UE to derive the K_{AKMA} key, an AKMA Key (K_{AKMA}) identifier (A-KID), and any AF keys (K_{AF}) used for communication security authentication or bootstrapping between the UE and respective AFs. A-KID identifies the root key (i.e., K_{AKMA}) used to derive K_{AF}, and includes A-TID (AKMA Temporary UE Identifier) and routing information for the UE's home network. More specifically, A-KID is in the NAI format specified in IETF RFC 7542 clause 2.2, i.e., username@realm. The username part includes the Routing Indicator (RID) and AKMA Temporary UE Identifier (A-TID), and the realm part includes Home Network Identifier. A-TID is derived from K_{AUSF}. For example, A-KID = "A-TID"."RID"@homenetworkrealm.

When the UE wants to use this feature with an AF, it constructs K_{AF} and A-KID and sends A-KID to the AF, which can be located within or outside of the operator network. The AF requests K_{AF} for the received A-KID from the AAnF via NEF when the AF is located outside the operator's network, or directly from AAnF when the AF is located inside the operator network. After authentication of the AF by the network, the AAnF sends K_{AF} corresponding to A-KID to the AF (directly or via NEF, as the case may be). With a recent enhancement in AKMA, the network also sends the user's Subscription Permanent Identifier (SUPI) to an AF inside the operator network, or the user's generic public subscription identifier (GPSI) to an AF outside the operator network. In this manner, the shared key material K_{AF} is available in UE and AF to support the security of the communication between them.

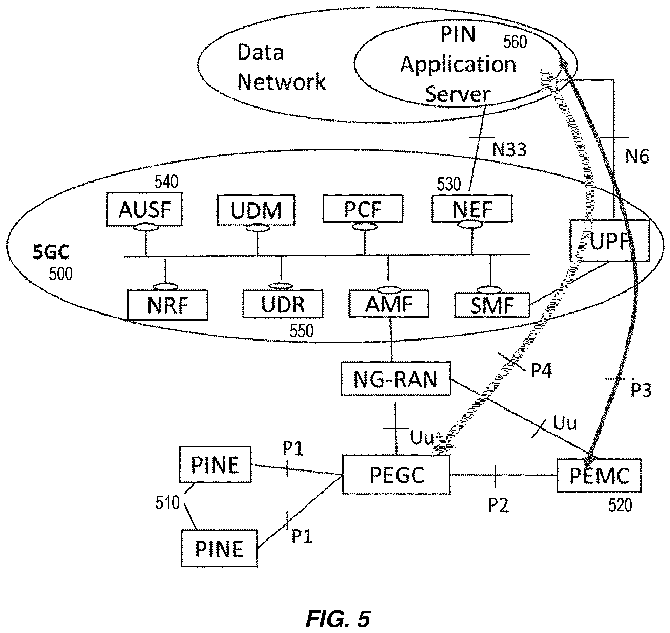

3GPP is currently studying Personal IoT Networks (PINs) as part of Rel-18. 3GPP TR 23.700-88 (v1.0.0) study on architecture enhancements for PINs contains various proposals on architecture needed in order for the 5GC to support PINs. Figure 5 shows one example of the architectures proposed in 3GPP TR 23.700-88. This example shows a PIN that includes two PINEs (510), a PEMC (520), and a PEGC, which are defined in 3GPP TR 23.700-88 and summarized above. The PINEs connect via P1 interface to the PEGC, which provides connectivity to NG-RAN via Uu interface. The PEMC communicates with PEGC via P2 interface, as well as with NG-RAN via Uu interface. Although shown separately in Figure 5, a single PINE can be both PEGC and PEMC for a PIN.

In addition, PEMC and PEGC have P3 and P4 logical interfaces, respectively, to a PIN application server (AS, 560), which handles management of the PIN. The PIN AS may be within or external to the 5GC (500), which includes an AUSF (540) and a UDR (550) among other NFs described above. In case the PIN AS is external (as shown in Figure 5), the 5GC can expose its services to PIN AS, for example, via N33 interface to NEF (530).

Alternately, the PIN AS can access the 5GC through a common API framework (CAPIF), which hides certain topology of the 5GC from external entities. In general, CAPIF can be thought of as a common connection point for northbound APIs from a 5GC to AFs. CAPIF provides capabilities to expose APIs, update APIs, and authenticate API invokers. In general, a northbound API enables lower-level network components to communicate with higher-level (or more central) network components. In contrast, a southbound API enables a higher-level (or more central) network component to send commands to a lower-level network component.

3GPP recently initiated a study on security for PINs, as further described in 3GPP TR 33.882 (v0.2.0). Currently, this document includes the following potential security requirements for PINEs: 1) a PINE in a Personal IoT network should be authenticated; and 2) a PINE in a Personal IoT network should be authorized.

As illustrated in Figure 5, however, not all PINEs are UEs with capability to connect to a 3GPP AN. Moreover, PINEs without this capability are unable perform primary authentication via AUSF in 5GC. As such, there currently is no mechanism to authenticate (or verify identity of) PINEs without 3GPP access capability towards the 5GC. Thus, unauthenticated and/or unidentified PINEs must be allowed to join or prohibited from joining a PIN, which can lead to problems of admitting rogue PINEs that are security risks or of keeping out valid PINEs that need to be admitted, respectively. Furthermore, the current arrangement does not restrict a PEMC UE (i.e., UE with PIN management capability) from adding PINEs to a PIN, even to PINs for which the PEMC UE may be a member but is not authorized to act as PEMC ("non-authorized PEMC").

Embodiments of the present disclosure address these and other problems, issues, and/or difficulties by techniques that can prevent a PEMC UE from adding a PINE to (or removing from) a PIN for which the UE is a non-authorized PEMC. In particular, these techniques are based on trust of security key Kausf which is only available in the PEMC UE and AUSF. For example, upon authenticating a PINE, a PEMC UE can generate a unique identifier for the PINE from a message authentication code (MAC) based on Kausf or a key derived from Kausf. This MAC can be used by the AUSF to verify the unique identifier of the PINE wanting to join the PIN, and that the PEMC UE requesting to add the PINE is authorized to alter the PIN by adding the PINE. Some embodiments include techniques to reuse existing identifiers to represent a PIN within the 5GC.

In this manner, embodiments add an extra layer of security to PINs, especially for PINs in which the PIN AS is external to 5GC and operated by an external party. The PIN AS can communicate with 5GC (e.g., AUSF) to verify that a PEMC UE trying to add (or remove) an identified PINE to (or from) a PIN is in fact an authorized PEMC for the PIN. PIN AS can communicate with 5GC via existing interfaces, e.g., via NEF or CAPIF. More generally, embodiments facilitate secure deployment of PINs in conjunction with 5G networks.

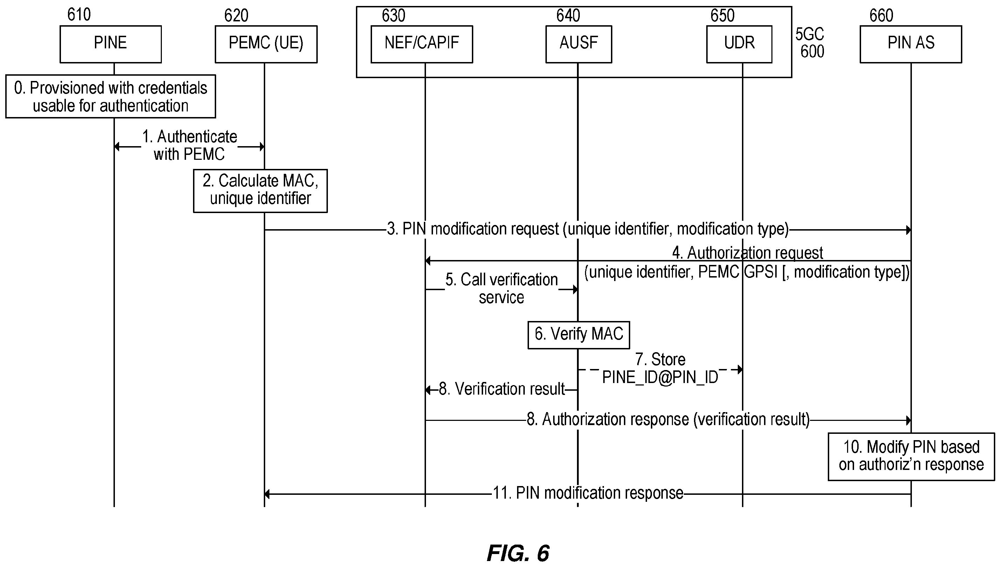

Figure 6 shows a signaling diagram for a procedure for authorization to add a PINE to a PIN, according to various embodiments of the present disclosure. The procedure involves a PINE (610), a PEMC (620), an NEF/CAPIF (630), an AUSF (640), a UDR (650), and a PIN AS (660). Although the operations of the procedure in Figure 6 are given numerical labels, this is done to facilitate the following explanation rather than to require or imply any particular operational order, unless expressly stated otherwise.

In operation 0, which can be considered a prerequisite, the PINE is provisioned with one or more credentials usable for authentication. For example, the PINE can be provisioned with a digital certificate or password stored in its memory. As another example, the PINE can have a QR code on its outer surface or packaging, which can be scanned by the PEMC to obtain necessary authentication credential.

In operation 1, the PINE uses its credential(s) to authenticate itself towards the PEMC. For example, the PINE and PEMC can perform authentication with certificates, where the PEMC verifies the PINE certificate is signed by a party trusted by the PEMC (e.g., a certificate authority). As another example, the PEMC authenticate the information contained in the QR code scanned from the PINE's packaging. As an alternative to the arrangement shown in Figure 6, the PINE can authenticate itself to an external entity, which informs PEMC of the result. Other arrangements to establish trust between PINE and PEMC are also possible.

In operation 2, after the PEMC is satisfied that the PINE is genuine and intended for a PEMC-managed PIN, the PEMC generates a request for the PINE to join the PIN. The request includes a unique identifier for the PINE that is generated by the PEMC. For example, the unique identifier can be generated in the following format:
PINE_ID:Nonce:keyedMAC@PIN_ID
where:
- PINE_ID may refer to a MAC address, something decided by PEMC, name field from a certificate, etc.;
- Nonce is an integer incremented for each request to prevent replay attacks, with use of such nonces being enabled for PEMC-capable UEs;
- keyedMAC is calculated using PINE_ID, nonce, PIN_ID, and Kausf as input; and
- PIN_ID uniquely identifies the PIN.

Note that the format of the unique identifier is similar to the format of a generic public subscriber identifier (GPSI), which can be used to identify a user's 3GPP network subscription in data networks external to a 3GPP system. In this manner, embodiments can reuse existing identifiers in 3GPP systems with some small modifications.

In some embodiments, keyedMAC can be calculated as based on the function HMAC-SHA-256 (Kausf , S), where HMAC-SHA-256 is a keyed hash algorithm that generates a hash-based message authentication code (HMAC) using the SHA-256 cryptographic hash function. The algorithm mixes a secret key (Kausf in this case) with the message data (S), hashes the result with SHA-256, mixes the resulting hash value with the secret key again, and then applies SHA-256 a second time. The resulting output hash is 256 bits long.

The message data (S) is a concatenated string that may include PINE_ID, nonce, PIN_ID, and a field FC with a value that is uniquely associated with this application of HMAC-SHA-256 to generate a MAC for a unique identifier for a PINE. The concatenated string in S may also include other fields, as needed. 3GPP TS 33.501 (v17.1.0) sections A.17-20 list various examples of message data (S) used to compute other types of MACs, which can be instructive for these embodiments of the present disclosure.

Since keyedMAC is calculated using PINE_ID, PIN_ID, nonce, and PEMC Kausf as input, keyedMAC may be considered another unique identifier of the PINE.

In operation 3, the PEMC sends a PIN modification request to the PIN AS via a secure connection, e.g., protected for integrity and confidentiality. The PIN modification request includes the unique identifier determined in operation 2 as well as the type of modification to be performed, e.g., adding or removing the PINE from the PIN (which is identified by the PIN_ID of the unique identifier). In some variants, the PEMC can encrypt the contents of the PIN modification request, which the PIN AS must forward to 5GC for decryption before it can proceed to operation 4 below.

In operation 4, the PIN AS sends an authorization request to NEF via N33 (or to CAPIF, as the case may be), using a connection that is protected for confidentiality and integrity. This request includes the unique identifier received in operation 3, as well as the PEMC's GPSI. This operation requires that the PIN AS is aware of the PEMC's GPSI, such as through prior provisioning. Optionally, the PIN AS includes in the authorization request the modification type received from the PEMC in operation 3.

In operation 5, in response to the authorization request in operation 4, the NEF (or CAPIF, as the case may be) calls an AUSF verification service and provides the unique identifier received in operation 4. In operation 6, the AUSF verifies the MAC portion of the unique identifier by calculating a keyedMAC in the same manner as the PEMC in operation 2, and by comparing the calculated keyedMAC to the corresponding part of the received unique identifier. A match results in verification, while no match results in non-verification. More specifically, by verifying the MAC, the AUSF determines that the PINE_ID corresponds to a legitimate PINE and that the PEMC UE is authorized to modify the PIN in accordance with the request to modify.

In some embodiments, the AUSF can map the PEMC's GPSI to an associated SUPI, from which the AUSF can determine whether the PEMC-capable UE is authorized to act as PEMC for the PIN identified by the PIN_ID suffix of the unique identifier. In case the modification type was received from the PIN AS with the authorization request, the AUSF can also determine whether the PEMC-capable UE is authorized to perform the particular type of modification for the PIN. For example, a PEMC may have different authorizations for adding and removing PINEs from a PIN.

In some embodiments, upon verification and authorization, the AUSF may update the status of the PEMC's PIN(s) to include the modification. For example, in operation 7, the AUSF can send the PINE_ID@PIN_ID to the UDR for storage in association with the PEMC's SUPI. As discussed above, the identifier PINE_ID@PIN_ID is a GPSI-like identifier and can be associated with the PEMC's SUPI in a similar manner as a conventional GPSI. Alternately, to clarify that identifier represents the PINE connected via the PEMC, the AUSF can construct it according to PINE_ID:PEMC_GPSI@PIN_ID.

In other variants, the AUSF can send the identifier to UDM, which can store the identifier in UDR as user subscription data. In other variants, the AUSF can send the identifier to UDSF, which can store it as unstructured data that is accessible to the AUSF and, optionally, other NFs.

In some embodiments, a PIN may include multiple PEMC-capable UEs that are authorized to act as PEMC for the PIN. In such embodiments, the PIN_ID can be represented by an Internal Group Identifier, which is currently used in 5GC to establish priority groups for charging, overload control, etc. In this arrangement, multiple SUPIs (i.e., for the respective PEMCs) can be associated with the Internal Group Identifier of the PIN. To avoid duplicate PINs, the 5GC may need to keep a mapping between unique Internal Group Identifiers and PIN names provided by PEMC(s).

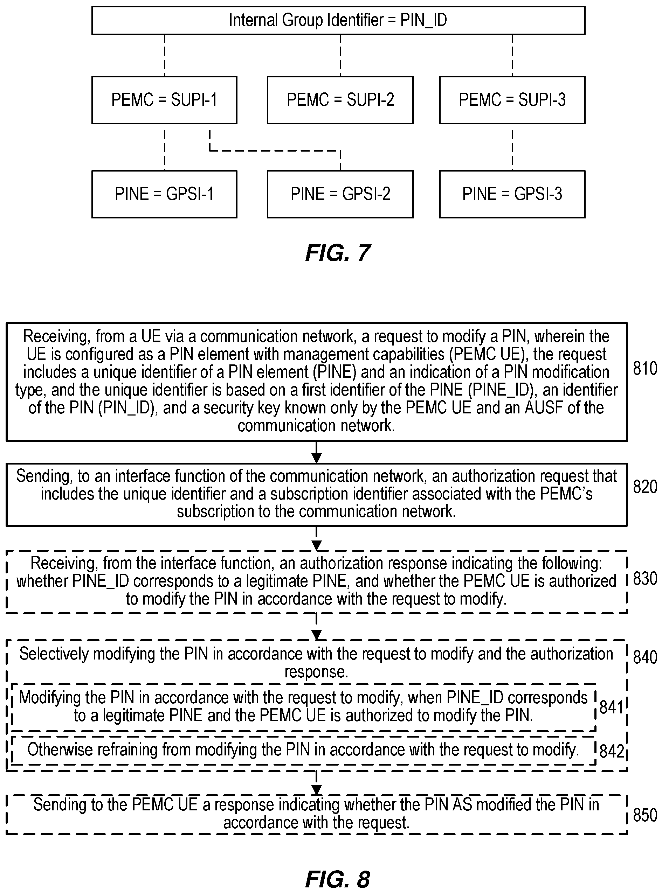

Figure 7 shows an example arrangement for using Internal Group Identifiers for PINs. In this arrangement, the Internal Group Identifier for the PIN is the PIN_ID. This PIN has three authorized PEMCs, which are UEs identified by SUPI-1, SUPI-2, and SUPI-3. In this case, SUPI-1 is associated with (i.e., as PEMC for) PINEs identified by GPSI-1 and GPSI-2, while SUPI-3 is associated with the PINE identified by GPSI-3 and SUPI-2 is associated with none of the PINEs.

Some additional logic is needed when adding or removing a PINE from a PIN with multiple authorized PEMCs, such as shown in Figure 7. For example, it would need to be determined if SUPI-2 is authorized to remove any of the PINEs associated with SUPI-1 or SUPI-3. Similarly, when adding a PINE_ID to one PEMC of a PIN, it would need to be determine whether the PINE_ID is already present in any of the GPSIs associated with other PEMCs of the PIN. This additional logic can be performed by the entity that stores the current status of the PIN in Figure 6 operation 7, such as UDR, UDM, or UDSF.

Returning to the description of Figure 6, in operation 8a, the AUSF informs the NEF about the success or failure of the MAC verification in operation 6. In some variants, the AUSF can digitally sign the message including the verification result. In operation 8b, the NEF forwards the verification result to the PIN AS. In operation 9, the PIN AS selectively modifies the PIN according to the received verification result, i.e., adding (or removing) the PINE when verified and refraining from adding (or removing) the PINE when not verified.

In operation 10, the PIN AS informs the PEMC about the result of the PIN modification requested by the PEMC in operation 3. In some variants, the PIN AS can include an indication that the 5GC (e.g., AUSF) was involved in verification of the request.

The embodiments described above can be further illustrated with reference to Figures 8-11, which depict exemplary methods (*e.g.,* procedures) for a PIN AS, an AUSF, a PEMC-capable UE, and a network interface function, respectively. Put differently, various features of the operations described below correspond to various embodiments described above. The exemplary methods shown in Figures 8-11 can be complementary to each other such that they can be used cooperatively to provide benefits, advantages, and/or solutions to problems described herein. Although the exemplary methods are illustrated in Figures 8-11 by specific blocks in particular orders, the operations corresponding to the blocks can be performed in different orders than shown and can be combined and/or divided into operations having different functionality than shown. Optional blocks and/or operations are indicated by dashed lines.

More specifically, Figure 8 illustrates an exemplary method (*e.g.,* procedure) for an application server (AS) for PINs, according to various embodiments of the present disclosure. The exemplary method shown in Figure 8 can be performed by a PIN AS (e.g., host computing system, network node, etc.) such as described elsewhere herein.

The exemplary method can include the operations of block 810, where the PIN AS can receive, from a UE via a communication network, a request to modify a PIN. The UE is configured as a PIN element with management capabilities (PEMC UE), the request includes a unique identifier of a PIN element (PINE) and an indication of a PIN modification type; and the unique identifier is based on the following: a first identifier of the PINE (PINE_ID), an identifier of the PIN (PIN_ID), and a security key known by the PEMC UE and an authentication server function (AUSF) of the communication network. For example, the first identifier (PINE_ID) may be a non-unique identifier of the PINE. In some examples, the security key is known only by the PEMC UE and the AUSF.

The exemplary method can also include the operations of block 820, where the PIN AS can send, to an interface function of the communication network, an authorization request that includes the unique identifier and a subscription identifier associated with the PEMC's subscription to the communication network.

In some embodiments, the unique identifier of the PINE comprises a message authentication code calculated using PINE_ID, PIN_ID, and the security key as inputs. As a more specific example, the unique identifier of the PINE has a format of PINE_ID:nonce:keyedMAC@PIN_ID, where nonce is an integer value that increments with each successive request to modify by the PEMC UE and keyedMAC is the message authentication code calculated using PINE_ID, nonce, PIN_ID, and the security key as inputs.

In some embodiments, the exemplary method can also include the operations of block 830, where the PIN AS can receive, from the interface function, an authorization response indicating the following: whether PINE_ID corresponds to a legitimate PINE, and whether the PEMC UE is authorized to modify the PIN in accordance with the request to modify. The exemplary method can also include the operations of block 840, where the PIN AS can selectively modify the PIN in accordance with the request to modify and the authorization response.

In some of these embodiments, the authorization request also includes the indication of the PIN modification type, which is one of adding or removing the PINE. In some of these embodiments, selectively modifying the PIN in block 840 includes the following operations, labelled with corresponding sub-block numbers:
- (841) modifying the PIN in accordance with the request to modify, when PINE_ID corresponds to a legitimate PINE and the PEMC UE is authorized to modify the PIN; and
- (842) otherwise refraining from modifying the PIN in accordance with the request to modify.

In some of these embodiments, the exemplary method can also include the operations of block 850, where the PIN AS can send to the PEMC UE a response indicating whether the PIN AS modified the PIN in accordance with the request. In some variants, the response sent to the PEMC UE also indicates that the communication network was involved in authorization of the request to modify.

In some embodiments, the communication network is a 5G core network (5GC) and the interface function is one of the following: a network exposure function (NEF), or a common application programming interface function (CAPIF). In some of these embodiments, the PIN_ID is an internal group identifier of the 5GC and the PIN_ID is associated with a plurality of subscription permanent identifiers (SUPIs) of a plurality of UEs authorized to be PEMCs for the PIN, including the PEMC UE.

In some embodiments, the security key is Kausf and the subscription identifier associated with the PEMC's subscription to the communication network is a generic public subscriber identifier (GPSI).

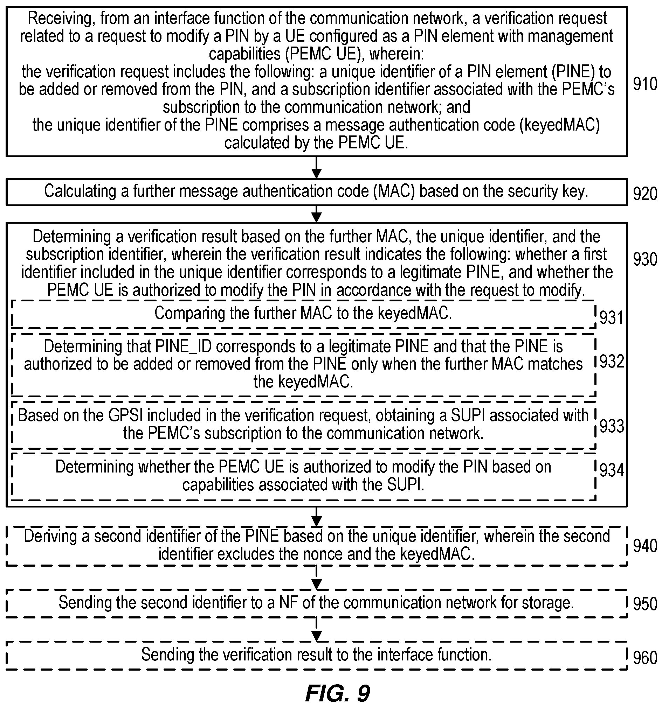

In addition, Figure 9 illustrates an exemplary method (*e.g.,* procedure) for an AUSF of a communication network (e.g., 5GC) to support management of PINs, according to various embodiments of the present disclosure. The exemplary method shown in Figure 9 can be performed by an AUSF (or a network node hosting the same) such as described elsewhere herein.

The exemplary method can include the operations of block 910, where the AUSF can receive, from an interface function of the communication network, a verification request related to a request to modify a PIN by a UE configured as a PIN element with management capabilities (PEMC UE). The verification request includes the following: a unique identifier of a PIN element (PINE) to be added or removed from the PIN, and a subscription identifier associated with the PEMC's subscription to the communication network. The unique identifier of the PINE comprises a message authentication code (keyedMAC) calculated by the PEMC UE.

The exemplary method can also include the operations of blocks 920-930, where the AUSF can calculate a further message authentication code (MAC) based on the security key and determine a verification result based on the further MAC, the unique identifier, and the subscription identifier. Specifically, the verification result indicates the following: whether a first identifier included in the unique identifier corresponds to a legitimate PINE, and whether the PEMC UE is authorized to modify the PIN in accordance with the request to modify.

In some embodiments, the unique identifier of the PINE (e.g., received in block 910) has a format of PINE_ID:nonce:keyedMAC@PIN_ID, where nonce is an integer value that increments with each successive request to modify by the PEMC UE, PINE_ID is the first identifier, and PIN_ID is an identifier of the PIN. In some of these embodiments, the further MAC is calculated (e.g., in block 920) using PINE_ID, nonce, PIN_ID, and the security key as inputs. In some of these embodiments, determining the verification result in block 930 includes the operations of sub-blocks 931-932, where the AUSF can compare the further MAC to the keyedMAC and determine that PINE_ID corresponds to a legitimate PINE and that the PINE is authorized to be added or removed from the PINE only when the further MAC matches the keyedMAC.

In some of these embodiments, the exemplary method can also include the operations of block 940, where the AUSF can derive a second identifier of the PINE based on the unique identifier, wherein the second identifier excludes the nonce and the keyedMAC. The exemplary method can also include the operations of block 950, where the AUSF can send the second identifier to a network function (NF) of the communication network for storage.

In some variants of these embodiments, the second identifier of the PINE has one of the following formats:
- PINE_ID@PIN_ID; or
- PINE_ID:PEMC_GPSI@PIN_ID, wherein PEMC_GPSI is the subscription identifier associated with the PEMC's subscription to the communication network.
In some variants, the NF is one of the following: unified data repository (UDR), unified data management (UDM) function, or unstructured data storage function (UDSF). In some of these variants, the NF may store the second identifier directly upon receiving it. In other of these variants, the NF may send the second identifier to another NF or repository for storage.

In some embodiments, the subscription identifier included in the verification request is a generic public subscriber identifier (GPSI) and determining the verification result includes the following operations, labelled with corresponding sub-block numbers:
- (933) based on the GPSI, obtaining a subscription permanent identifier (SUPI) associated with the PEMC's subscription to the communication network; and
- (934) determining whether the PEMC UE is authorized to modify the PIN based on capabilities associated with the SUPI.

In some of these embodiments, the verification request also includes an indication of a PIN modification type, which is one of adding or removing the PINE, and determining whether the PEMC UE is authorized to modify the PIN in block 934 is further based on the indicated PIN modification type.

In some of these embodiments, the PIN_ID is an internal group identifier of the communication network and is associated with a plurality of SUPIs of a plurality of UEs authorized to be PEMCs for the PIN, including the PEMC UE. In such case, when the request to modify is for removing the PINE from the PIN, determining whether the PEMC UE is authorized to modify the PIN in sub-block 933 is further based on one or more of the following:
- whether the PINE is associated with a SUPI of the PEMC UE; and
- whether the PEMC UE is authorized to remove PINEs associated with SUPIs of other UEs authorized to be PEMCs for the PIN.

In some embodiments, the exemplary method can include the operations of block 960, where the AUSF can send the verification result to the interface function.

In some embodiments, the communication network is a 5GC, the security key is Kausf; and the interface function is one of the following: an NEF, or a CAPIF.

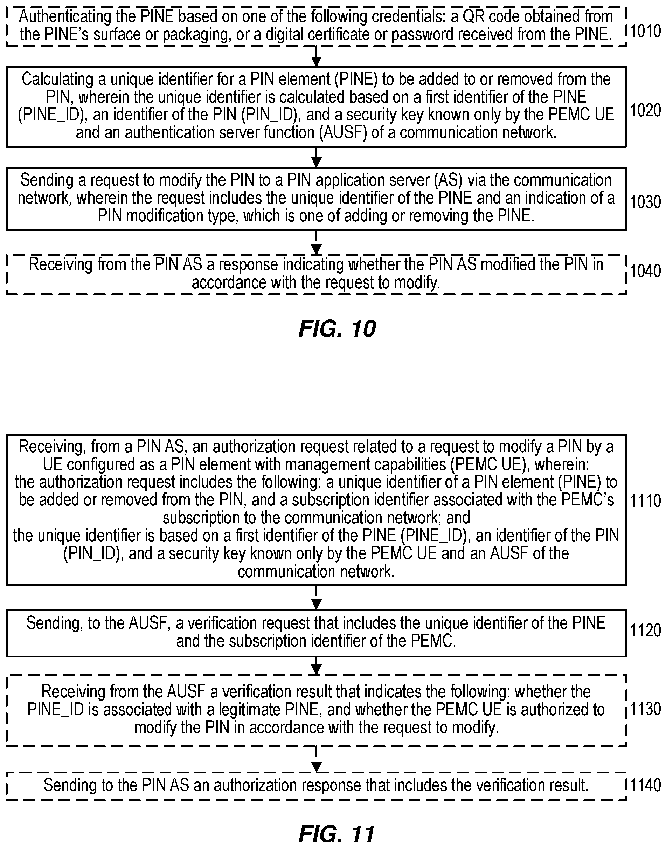

In addition, Figure 10 illustrates an exemplary method (*e.g.,* procedure) for a UE configured with management capabilities for a PIN, according to various embodiments of the present disclosure. The exemplary method shown in Figure 10 can be performed by a PEMC UE (e.g., wireless device) such as described elsewhere herein.

The exemplary method can include the operations of block 1020, where the PEMC UE can calculate a unique identifier for a PINE to be added to or removed from the PIN. The unique identifier is calculated based on a first identifier of the PINE (PINE_ID), an identifier of the PIN (PIN_ID), and a security key known by the PEMC UE and an AUSF of a communication network. The exemplary method can also include the operations of block 1030, where the PEMC UE can send a request to modify the PIN to a PIN AS via the communication network. The request includes the unique identifier of the PINE and an indication of a PIN modification type, which is one of adding or removing the PINE. In some examples, the security key is only known by the PEMC UE and the AUSF.

In some embodiments, the unique identifier of the PINE comprises a message authentication code calculated using PINE_ID, PIN_ID, and the security key as inputs. As a more specific example, the unique identifier of the PINE has a format of PINE_ID:nonce:keyedMAC@PIN_ID, where nonce is an integer value that increments with each successive request to modify by the PEMC UE and keyedMAC is the message authentication code calculated using PINE_ID, nonce, PIN_ID, and the security key as inputs.

In some embodiments, the exemplary method can also include the operations of block 1010, where the PEMC UE can authenticate the PINE based on one of the following credentials: a QR code obtained from the PINE's surface or packaging; or a digital certificate or password received from the PINE. In such case, calculating the unique identifier for the PINE in block 1020 is responsive to authenticating the PINE in block 1010.

In some embodiments, the exemplary method can also include the operations of block 1040, where the PEMC UE can receive from the PIN AS a response indicating whether the PIN AS modified the PIN in accordance with the request to modify. In some of these embodiments, the response also indicates that the communication network was involved in authorization of the request to modify.

In some embodiments, the communication network is a 5GC and the security key is Kausf. In some of these embodiments, the PIN_ID is an internal group identifier of the 5GC and is associated with a plurality of SUPIs of a plurality of UEs (i.e., one SUPI per UE) authorized to be PEMCs for the PIN, including the PEMC UE.

Although various embodiments are described above in terms of methods, techniques, and/or procedures, the person of ordinary skill will readily comprehend that such methods, techniques, and/or procedures can be embodied by various combinations of hardware and software in various systems, communication devices, computing devices, control devices, apparatuses, non-transitory computer-readable media, computer program products, *etc.*

In addition, Figure 11 illustrates an exemplary method (*e.g.,* procedure) for an interface function of a communication network (e.g., 5GC) to support management of PINs, according to various embodiments of the present disclosure. The exemplary method shown in Figure 11 can be performed by any appropriate interface function (e.g., NEF, CAPIF) such as described elsewhere herein.

The exemplary method can include the operations of block 1110, where the interface function can receive, from a PIN AS, an authorization request related to a request to modify a PIN by a UE configured as a PIN element with management capabilities (PEMC UE). The authorization request includes the following: a unique identifier of a PIN element (PINE) to be added or removed from the PIN, and a subscription identifier associated with the PEMC's subscription to the communication network. The unique identifier is based on a first identifier of the PINE (PINE_ID), an identifier of the PIN (PIN_ID), and a security key known by the PEMC UE and an AUSF of the communication network. In some examples, the security key is known only by the PEMC UE and the AUSF.

The exemplary method can also include the operations of block 1120, where the interface function can send, to the AUSF, a verification request that includes the unique identifier of the PINE and the subscription identifier of the PEMC.

In some embodiments, the exemplary method can also include the operations of block 1130, where the interface function can receive from the AUSF a verification result that indicates the following: whether the PINE_ID is associated with a legitimate PINE, and whether the PEMC UE is authorized to modify the PIN in accordance with the request to modify. The exemplary method can also include the operations of block 1140, where the interface function can send to the PIN AS an authorization response that includes the verification result.

In some embodiments, the unique identifier of the PINE comprises a message authentication code calculated using PINE_ID, PIN_ID, and the security key as inputs. As a more specific example, the unique identifier of the PINE has a format of PINE_ID:nonce:keyedMAC@PIN_ID, where nonce is an integer value that increments with each successive request to modify by the PEMC UE and keyedMAC is the message authentication code calculated using PINE_ID, nonce, PIN_ID, and the security key as inputs.

In some embodiments, the authorization request in block 1110 also includes an indication of a PIN modification type, which is one of adding or removing the PINE. The verification request in block 1120 also includes the indication of the PIN modification type.

In some embodiments, the communication network is a 5GC and the interface function is one of the following: an NEF, or a CAPIF. In some of these embodiments, the security key is Kausf and the subscription identifier associated with the PEMC's subscription to the communication network is a GPSI. In some of these embodiments, the PIN_ID is an internal group identifier of the 5GC and is associated with a plurality of SUPIs of a plurality of UEs (i.e., one SUPI per UE) authorized to be PEMCs for the PIN, including the PEMC UE.

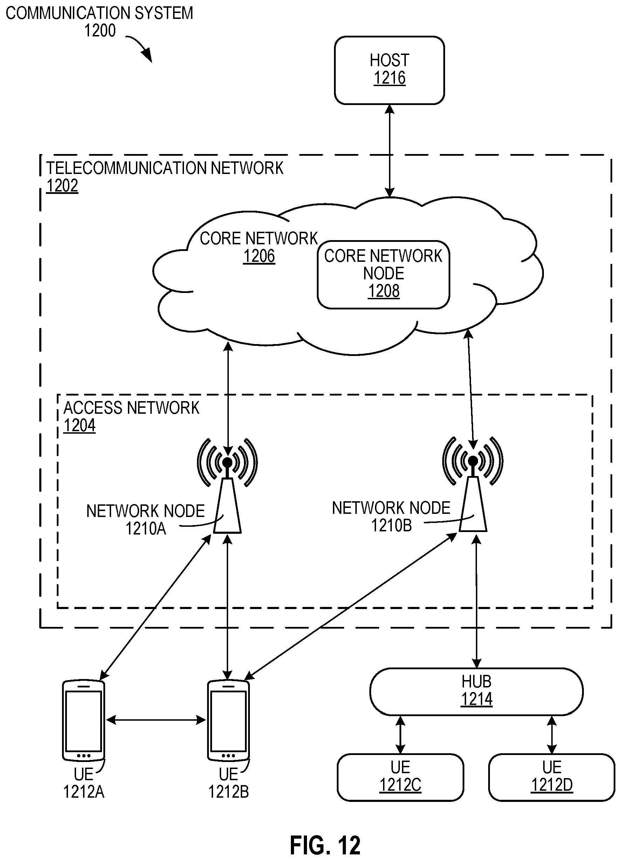

Figure 12 shows an example of a communication system 1200 in accordance with some embodiments. In this example, the communication system 1200 includes a telecommunication network 1202 that includes an access network 1204, such as a radio access network (RAN), and a core network 1206, which includes one or more core network nodes 1208. The access network 1204 includes one or more access network nodes, such as network nodes 1210a and 1210b (one or more of which may be generally referred to as network nodes 1210), or any other similar 3GPP access node or non-3GPP access point. The network nodes 1210 facilitate direct or indirect connection of UEs, such as by connecting UEs 1212a-d (one or more of which may be generally referred to as UEs 1212) to core network 1206 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 1200 may include any number of wired or wireless networks, network nodes, UEs, and/or any other components or systems that may facilitate or participate in the communication of data and/or signals whether via wired or wireless connections. The communication system 1200 may include and/or interface with any type of communication, telecommunication, data, cellular, radio network, and/or other similar type of system.

UEs 1212 may be any of a wide variety of communication devices, including wireless devices arranged, configured, and/or operable to communicate wirelessly with the network nodes 1210 and other communication devices. Similarly, the network nodes 1210 are arranged, capable, configured, and/or operable to communicate directly or indirectly with the UEs 1212 and/or with other network nodes or equipment in the telecommunication network 1202 to enable and/or provide network access, such as wireless network access, and/or to perform other functions, such as administration in the telecommunication network 1202.

In the depicted example, core network 1206 connects network nodes 1210 to one or more hosts, such as host 1216. These connections may be direct or indirect via one or more intermediary networks or devices. In other examples, network nodes may be directly coupled to hosts. Core network 1206 includes one more core network nodes (e.g., core network node 1208) that are structured with hardware and software components. Features of these components may be substantially similar to those described with respect to the UEs, network nodes, and/or hosts, such that the descriptions thereof are generally applicable to the corresponding components of the core network node 1208. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

Host 1216 may be under the ownership or control of a service provider other than an operator or provider of the access network 1204 and/or the telecommunication network 1202, and may be operated by the service provider or on behalf of the service provider. The host 1216 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 1200 of Figure 12 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the IEEE 802.11 WiFi; and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 1202 is a cellular network that implements 3GPP standardized features. Accordingly, the telecommunications network 1202 may support network slicing to provide different logical networks to different devices that are connected to the telecommunication network 1202. For example, the telecommunications network 1202 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, UEs 1212 are configured to transmit and/or receive information without direct human interaction. For instance, a UE may be designed to transmit information to access network 1204 on a predetermined schedule, when triggered by an internal or external event, or in response to requests from the access network 1204. Additionally, a UE may be configured for operating in single- or multi-RAT or multi-standard mode. For example, a UE may operate with any one or combination of Wi-Fi, NR (New Radio) and LTE, i.e., being configured for multi-radio dual connectivity (MR-DC), such as E-UTRAN/NR Dual Connectivity (EN-DC).

In the example, the hub 1214 communicates with the access network 1204 to facilitate indirect communication between one or more UEs (e.g., UE 1212c and/or 1212d) and network nodes (e.g., network node 1210b). In some examples, the hub 1214 may be a controller, router, content source and analytics, or any of the other communication devices described herein regarding UEs. For example, the hub 1214 may be a broadband router enabling access to the core network 1206 for the UEs. As another example, the hub 1214 may be a controller that sends commands or instructions to one or more actuators in the UEs. Commands or instructions may be received from the UEs, network nodes 1210, or by executable code, script, process, or other instructions in the hub 1214. As another example, the hub 1214 may be a data collector that acts as temporary storage for UE data and, in some embodiments, may perform analysis or other processing of the data. As another example, the hub 1214 may be a content source. For example, for a UE that is a VR headset, display, loudspeaker or other media delivery device, the hub 1214 may retrieve VR assets, video, audio, or other media or data related to sensory information via a network node, which the hub 1214 then provides to the UE either directly, after performing local processing, and/or after adding additional local content. In still another example, the hub 1214 acts as a proxy server or orchestrator for the UEs, in particular in if one or more of the UEs are low energy IoT devices.

The hub 1214 may have a constant/persistent or intermittent connection to the network node 1210b. The hub 1214 may also allow for a different communication scheme and/or schedule between the hub 1214 and UEs (e.g., UE 1212c and/or 1212d), and between the hub 1214 and the core network 1206. In other examples, the hub 1214 is connected to the core network 1206 and/or one or more UEs via a wired connection. Moreover, the hub 1214 may be configured to connect to an M2M service provider over the access network 1204 and/or to another UE over a direct connection. In some scenarios, UEs may establish a wireless connection with the network nodes 1210 while still connected via the hub 1214 via a wired or wireless connection. In some embodiments, the hub 1214 may be a dedicated hub - that is, a hub whose primary function is to route communications to/from the UEs from/to the network node 1210b. In other embodiments, the hub 1214 may be a non-dedicated hub - that is, a device which is capable of operating to route communications between the UEs and network node 1210b, but which is additionally capable of operating as a communication start and/or end point for certain data channels.

In some embodiments, UE 1212 can be configured to perform operations attributed to a PEMC UE, core network node 1208 can be configured to perform operations attributed to a AUSF or an interface function (e.g., NEF, CAPIF), and host 1216 can be configured to perform operations attributed to a PIN AS in the above descriptions of Figures 6 and 8-11.

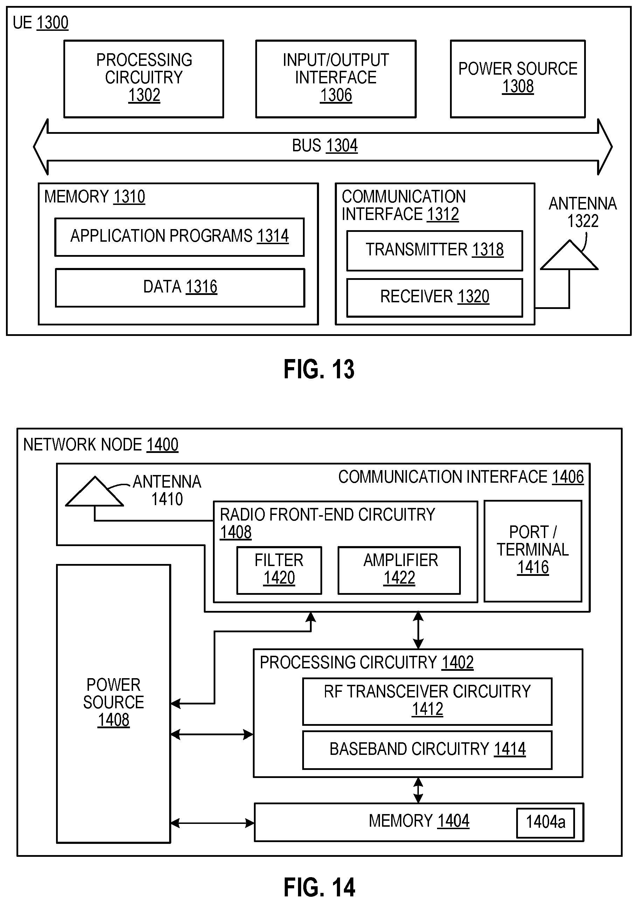

Figure 13 shows a UE 1300 in accordance with some embodiments. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), vehicle-to-everything (V2X), and/or personal Internet-of-Things networks (PINs). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 1300 includes processing circuitry 1302 that is operatively coupled via a bus 1304 to an input/output interface 1306, a power source 1308, a memory 1310, a communication interface 1312, and/or any other component, or any combination thereof. Certain UEs may utilize all or a subset of the components shown in Figure 13. The level of integration between the components may vary from one UE to another UE. Further, certain UEs may contain multiple instances of a component, such as multiple processors, memories, transceivers, transmitters, receivers, etc.

The processing circuitry 1302 is configured to process instructions and data and may be configured to implement any sequential state machine operative to execute instructions stored as machine-readable computer programs in the memory 1310. The processing circuitry 1302 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 1302 may include multiple central processing units (CPUs).

In the example, the input/output interface 1306 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 1300. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 1308 is structured as a battery or battery pack. Other types of power sources, such as an external power source (e.g., an electricity outlet), photovoltaic device, or power cell, may be used. The power source 1308 may further include power circuitry for delivering power from the power source 1308 itself, and/or an external power source, to the various parts of the UE 1300 via input circuitry or an interface such as an electrical power cable. Delivering power may be, for example, for charging of the power source 1308. Power circuitry may perform any formatting, converting, or other modification to the power from the power source 1308 to make the power suitable for the respective components of the UE 1300 to which power is supplied.

The memory 1310 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 1310 includes one or more application programs 1314, such as an operating system, web browser application, a widget, gadget engine, or other application, and corresponding data 1316. The memory 1310 may store, for use by the UE 1300, any of a variety of various operating systems or combinations of operating systems.

The memory 1310 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 1310 may allow the UE 1300 to access instructions, application programs and the like, stored on transitory or non-transitory memory media, to off-load data, or to upload data. An article of manufacture, such as one utilizing a communication system may be tangibly embodied as or in the memory 1310, which may be or comprise a device-readable storage medium.

The processing circuitry 1302 may be configured to communicate with an access network or other network using the communication interface 1312. The communication interface 1312 may comprise one or more communication subsystems and may include or be communicatively coupled to an antenna 1322. The communication interface 1312 may include one or more transceivers used to communicate, such as by communicating with one or more remote transceivers of another device capable of wireless communication (e.g., another UE or a network node in an access network). Each transceiver may include a transmitter 1318 and/or a receiver 1320 appropriate to provide network communications (e.g., optical, electrical, frequency allocations, and so forth). Moreover, the transmitter 1318 and receiver 1320 may be coupled to one or more antennas (e.g., antenna 1322) and may share circuit components, software or firmware, or alternatively be implemented separately.

In the illustrated embodiment, communication functions of the communication interface 1312 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 1312, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., an alert is sent when moisture is detected), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Moreover, such a UE may be operable in one or more personal Internet-of-Things networks (PINs). Non-limiting examples of such UEs are devices that are or are embedded in home/personal appliances, controllers, and monitoring devices such as connected refrigerators or freezers, TVs, connected lighting, electricity meters, vacuum cleaners, voice-controlled smart speakers, home security cameras, motion detectors, thermostats, smoke detectors, door/window sensors, moisture sensors, door locks, doorbells, heating/air conditioning units, autonomous vehicles, surveillance systems, weather monitors, vehicle parking monitors, EV charging stations, smart watches, fitness trackers, head-mounted AR/VR displays, a wearable device for tactile augmentation or sensory enhancement, irrigation sprinklers, animal- or item-tracking devices, medical devices (e.g., heart monitors). Other examples include sensors for monitoring a plant or animal, industrial robots, unmanned aerial vehicles (UAVs), etc. A UE in the form of an IoT device comprises circuitry and/or software in dependence of the intended application of the IoT device in addition to other components as described in relation to the UE 1300 shown in Figure 13.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT and/or PIN standards. In other scenarios, a UE may represent a vehicle, such as a car, a bus, a truck, a ship and an airplane, or other equipment that is capable of monitoring and/or reporting on its operational status or other functions associated with its operation.

In some embodiments, UE 1300 can be configured to perform operations attributed to a PEMC UE in the above descriptions of Figures 6 and 8-11.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator, and handle communication of data for both the speed sensor and the actuators.

**Figure 14** shows a network node 1400 in accordance with some embodiments. Examples of network nodes include, but are not limited to, access points (APs) (e.g., radio access points) and base stations (e.g., radio base stations, Node Bs, eNBs, gNBs, etc.).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 1400 includes a processing circuitry 1402, a memory 1404, a communication interface 1406, and a power source 1408. The network node 1400 may be composed of multiple physically separate components (e.g., a NodeB component and a RNC component, or a BTS component and a BSC component, etc.), which may each have their own respective components. In certain scenarios in which the network node 1400 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 1400 may be configured to support multiple radio access technologies (RATs). In such embodiments, some components may be duplicated (e.g., separate memory 1404 for different RATs) and some components may be reused (e.g., a same antenna 1410 may be shared by different RATs). The network node 1400 may also include multiple sets of the various illustrated components for different wireless technologies integrated into network node 1400, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 1400.

The processing circuitry 1402 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1400 components, such as the memory 1404, to provide network node 1400 functionality.

In some embodiments, the processing circuitry 1402 includes a system on a chip (SOC). In some embodiments, the processing circuitry 1402 includes one or more of radio frequency (RF) transceiver circuitry 1412 and baseband processing circuitry 1414. In some embodiments, the radio frequency (RF) transceiver circuitry 1412 and the baseband processing circuitry 1414 may be on separate chips (or sets of chips), boards, or units, such as radio units and digital units. In alternative embodiments, part or all of RF transceiver circuitry 1412 and baseband processing circuitry 1414 may be on the same chip or set of chips, boards, or units.

The memory 1404 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 1402. The memory 1404 may store any suitable instructions, data, or information, including a computer program, software, an application including one or more of logic, rules, code, tables, and/or other instructions (collectively denoted computer program product 1404a) capable of being executed by the processing circuitry 1402 and utilized by the network node 1400. The memory 1404 may be used to store any calculations made by the processing circuitry 1402 and/or any data received via the communication interface 1406. In some embodiments, the processing circuitry 1402 and memory 1404 is integrated.

The communication interface 1406 is used in wired or wireless communication of signaling and/or data between a network node, access network, and/or UE. As illustrated, the communication interface 1406 comprises port(s)/terminal(s) 1416 to send and receive data, for example to and from a network over a wired connection. The communication interface 1406 also includes radio front-end circuitry 1418 that may be coupled to, or in certain embodiments a part of, the antenna 1410. Radio front-end circuitry 1418 comprises filters 1420 and amplifiers 1422. The radio front-end circuitry 1418 may be connected to an antenna 1410 and processing circuitry 1402. The radio front-end circuitry may be configured to condition signals communicated between antenna 1410 and processing circuitry 1402. The radio front-end circuitry 1418 may receive digital data that is to be sent out to other network nodes or UEs via a wireless connection. The radio front-end circuitry 1418 may convert the digital data into a radio signal having the appropriate channel and bandwidth parameters using a combination of filters 1420 and/or amplifiers 1422. The radio signal may then be transmitted via the antenna 1410. Similarly, when receiving data, the antenna 1410 may collect radio signals which are then converted into digital data by the radio front-end circuitry 1418. The digital data may be passed to the processing circuitry 1402. In other embodiments, the communication interface may comprise different components and/or different combinations of components.

In certain alternative embodiments, the network node 1400 does not include separate radio front-end circuitry 1418, instead, the processing circuitry 1402 includes radio front-end circuitry and is connected to the antenna 1410. Similarly, in some embodiments, all or some of the RF transceiver circuitry 1412 is part of the communication interface 1406. In still other embodiments, the communication interface 1406 includes one or more ports or terminals 1416, the radio front-end circuitry 1418, and the RF transceiver circuitry 1412, as part of a radio unit (not shown), and the communication interface 1406 communicates with the baseband processing circuitry 1414, which is part of a digital unit (not shown).

The antenna 1410 may include one or more antennas, or antenna arrays, configured to send and/or receive wireless signals. The antenna 1410 may be coupled to the radio front-end circuitry 1418 and may be any type of antenna capable of transmitting and receiving data and/or signals wirelessly. In certain embodiments, the antenna 1410 is separate from the network node 1400 and connectable to the network node 1400 through an interface or port.

The antenna 1410, communication interface 1406, and/or the processing circuitry 1402 may be configured to perform any receiving operations and/or certain obtaining operations described herein as being performed by the network node. Any information, data and/or signals may be received from a UE, another network node and/or any other network equipment. Similarly, the antenna 1410, the communication interface 1406, and/or the processing circuitry 1402 may be configured to perform any transmitting operations described herein as being performed by the network node. Any information, data and/or signals may be transmitted to a UE, another network node and/or any other network equipment.

The power source 1408 provides power to the various components of network node 1400 in a form suitable for the respective components (e.g., at a voltage and current level needed for each respective component). The power source 1408 may further comprise, or be coupled to, power management circuitry to supply the components of the network node 1400 with power for performing the functionality described herein. For example, the network node 1400 may be connectable to an external power source (e.g., the power grid, an electricity outlet) via an input circuitry or interface such as an electrical cable, whereby the external power source supplies power to power circuitry of the power source 1408. As a further example, the power source 1408 may comprise a source of power in the form of a battery or battery pack which is connected to, or integrated in, power circuitry. The battery may provide backup power should the external power source fail.

In some embodiments, network node 1400 can be configured to perform operations attributed to a AUSF or to an interface function (e.g., NEF, CAPIF) in the above descriptions of Figures 6 and 8-11.

Embodiments of the network node 1400 may include additional components beyond those shown in Figure 14 for providing certain aspects of the network node's functionality, including any of the functionality described herein and/or any functionality necessary to support the subject matter described herein. For example, the network node 1400 may include user interface equipment to allow input of information into the network node 1400 and to allow output of information from the network node 1400. This may allow a user to perform diagnostic, maintenance, repair, and other administrative functions for the network node 1400.

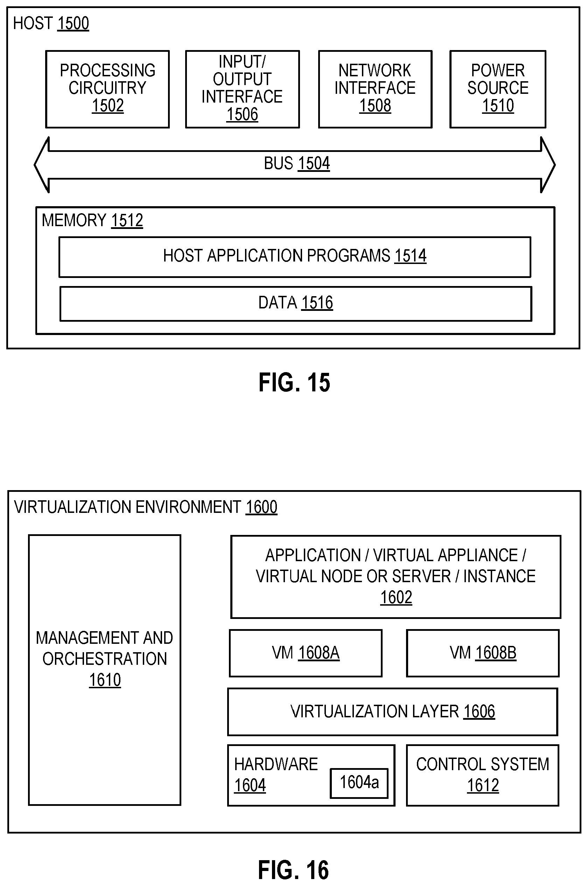

Figure 15 is a block diagram of a host 1500, which may be an embodiment of the host 1216 of Figure 12, in accordance with various aspects described herein. As used herein, the host 1500 may be or comprise various combinations hardware and/or software, including a standalone server, a blade server, a cloud-implemented server, a distributed server, a virtual machine, container, or processing resources in a server farm. The host 1500 may provide one or more services to one or more UEs.

The host 1500 includes processing circuitry 1502 that is operatively coupled via a bus 1504 to an input/output interface 1506, a network interface 1508, a power source 1510, and a memory 1512. Other components may be included in other embodiments. Features of these components may be substantially similar to those described with respect to the devices of previous figures, such as Figures 13 and 14, such that the descriptions thereof are generally applicable to the corresponding components of host 1500.

The memory 1512 may include one or more computer programs including one or more host application programs 1514 and data 1516, which may include user data, e.g., data generated by a UE for the host 1500 or data generated by the host 1500 for a UE. Embodiments of the host 1500 may utilize only a subset or all of the components shown. The host application programs 1514 may be implemented in a container-based architecture such as Docker, Kubernetes, etc.

In some embodiments, host 1500 can be configured to perform operations attributed to a PIN AS in the above descriptions of Figures 6 and 8-11.

Figure 16 is a block diagram illustrating a virtualization environment 1600 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1600 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1602 (which may alternatively be called software instances, virtual appliances, network functions, virtual nodes, virtual network functions, etc.) are run in the virtualization environment 1600 to implement some of the features, functions, and/or benefits of some of the embodiments disclosed herein.

In some embodiments, one or more of a PIN AS, an AUSF, and an interface function (e.g., NEF, CAPIF) can be implemented in environment 1600 as virtual network functions (NFs) or application functions (AFs). In such case, the virtual NFs and/or AFs can be configured to perform operations attributed to an AUSF, an interface function, and/or a PIN AS in the above descriptions of Figures 6 and 8-11.

Hardware 1604 includes processing circuitry, memory that stores software and/or instructions (collectively denoted computer program product 1604a) executable by hardware processing circuitry, and/or other hardware devices as described herein, such as a network interface, input/output interface, and so forth. Software may be executed by the processing circuitry to instantiate one or more virtualization layers 1606 (also referred to as hypervisors or virtual machine monitors (VMMs)), provide VMs 1608a and 1608b (one or more of which may be generally referred to as VMs 1608), and/or perform any of the functions, features and/or benefits described in relation with some embodiments described herein. The virtualization layer 1606 may present a virtual operating platform that appears like networking hardware to the VMs 1608.

The VMs 1608 comprise virtual processing, virtual memory, virtual networking or interface and virtual storage, and may be run by a corresponding virtualization layer 1606. Different embodiments of the instance of a virtual appliance 1602 may be implemented on one or more of VMs 1608, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 1608 may be a software implementation of a physical machine that runs programs as if they were executing on a physical, non-virtualized machine. Each of the VMs 1608, and that part of hardware 1604 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1608 on top of the hardware 1604 and corresponds to the application 1602.

Hardware 1604 may be implemented in a standalone network node with generic or specific components. Hardware 1604 may implement some functions via virtualization. Alternatively, hardware 1604 may be part of a larger cluster of hardware (e.g., such as in a data center or CPE) where many hardware nodes work together and are managed via management and orchestration 1610, which, among others, oversees lifecycle management of applications 1602. In some embodiments, hardware 1604 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1612 which may alternatively be used for communication between hardware nodes and radio units.

The foregoing merely illustrates the principles of the disclosure. The invention is defined by the independent claims. Further embodiments are defined by the dependent claims. Various modifications and alterations to the described embodiments will be apparent to those skilled in the art in view of the teachings herein.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification and drawings, can be used synonymously in certain instances (*e.g.,* "data" and "information"). It should be understood, that although these terms (and/or other terms that can be synonymous to one another) can be used synonymously herein, there can be instances when such words can be intended to not be used synonymously.

## Claims

1. A method for an application server, AS, for personal Internet-of-Things networks, PINs, the method comprising:
receiving (810), from a user equipment, UE, via a communication network, a request to modify a PIN, wherein:
the UE is configured as a PIN element with management capabilities, PEMC UE;
the request includes a unique identifier of a PIN element, PINE, and an indication of a PIN modification type; and
the unique identifier is based on the following: a first identifier of the PINE, PINE_ID; an identifier of the PIN, PIN_ID; and a security key known only by the PEMC UE and an authentication server function, AUSF, of the communication network;
sending (820), to an interface function of the communication network, an authorization request that includes the unique identifier and a subscription identifier associated with the PEMC UE's subscription to the communication network.

2. The method of claim 1, wherein the unique identifier of the PINE comprises a message authentication code, MAC, calculated using PINE_ID, PIN_ID, and the security key as inputs; and/or wherein:
the unique identifier of the PINE has a format of PINE_ID:nonce:keyedMAC@PIN_ID;
nonce is an integer value that increments with each successive request to modify by the PEMC UE; and
keyedMAC is the MAC calculated using PINE_ID, nonce, PIN_ID, and the security key as inputs.

3. The method of any of claims 1-2, further comprising:
receiving (830), from the interface function, an authorization response indicating the following:
whether PINE_ID corresponds to a legitimate PINE; and
whether the PEMC UE is authorized to modify the PIN in accordance with the request to modify; and
selectively modifying (840) the PIN in accordance with the request to modify and the authorization response; and/ or
wherein the authorization request also includes the indication of the PIN modification type, which is one of adding or removing the PINE; and/ or
the method further comprising sending (850) to the PEMC UE a response indicating whether the PIN AS modified the PIN in accordance with the request, wherein the response sent to the PEMC UE also indicates that the communication network was involved in authorization of the request to modify.

4. The method of claim 3, wherein selectively modifying (840) the PIN comprises:
modifying (841) the PIN in accordance with the request to modify, when PINE_ID corresponds to a legitimate PINE and the PEMC UE is authorized to modify the PIN; and
otherwise refraining from modifying (842) the PIN in accordance with the request to modify.

5. A method performed by an authentication server function, AUSF, of a communication network to support management of personal Internet-of-Things networks, PINs, the method comprising:
receiving (910), from an interface function of the communication network, a verification request related to a request to modify a PIN by a user equipment, UE, configured as a PIN element with management capabilities, PEMC UE, wherein:
the verification request includes the following: a unique identifier of a PIN element, PINE, to be added or removed from the PIN, and a subscription identifier associated with the PEMC UE's subscription to the communication network; and
the unique identifier of the PINE comprises a message authentication code, keyedMAC, calculated by the PEMC UE;
calculating (920) a further message authentication code, MAC, based on the security key; and
determining (930) a verification result based on the further MAC, the unique identifier, and the subscription identifier, wherein the verification result indicates the following:
whether a first identifier included in the unique identifier corresponds to a legitimate PINE; and
whether the PEMC UE is authorized to modify the PIN in accordance with the request to modify.

6. The method of claim 5, wherein:
the unique identifier of the PINE has a format of PINE_ID:nonce:keyedMAC@PIN_ID;
nonce is an integer value that increments with each successive request to modify by the PEMC UE;
PINE_ID is the first identifier; and
PIN_ID is an identifier of the PIN; and/ or
wherein the further MAC is calculated using PINE_ID, nonce, PIN_ID, and the security key as inputs.

7. The method of claim 6, wherein determining (930) the verification result comprises:
comparing (931) the further MAC to the keyedMAC; and
determining (932) that PINE_ID corresponds to a legitimate PINE and that the PINE is authorized to be added or removed from the PINE only when the further MAC matches the keyedMAC.

8. A method performed by a user equipment, PEMC UE, configured with management capabilities for a personal Internet-of-Things network, PIN, the method comprising:
calculating (1020) a unique identifier for a PIN element, PINE, to be added to or removed from the PIN, wherein the unique identifier is calculated based on the following: a first identifier of the PINE, PINE_ID; an identifier of the PIN, PIN_ID; and a security key known only by the PEMC UE and an authentication server function, AUSF, of a communication network; and
sending (1030) a request to modify the PIN to a PIN application server, AS, via the communication network, wherein the request includes the unique identifier of the PINE and an indication of a PIN modification type, which is one of adding or removing the PINE.

9. The method of claim 8, wherein the unique identifier of the PINE comprises a message authentication code calculated using PINE_ID, PIN_ID, and the security key as inputs; and/ or
wherein:
the unique identifier of the PINE has a format of PINE_ID:nonce:keyedMAC@PIN_ID;
nonce is an integer value that increments with each successive request to modify by the PEMC UE; and
keyedMAC is the MAC calculated using PINE_ID, nonce, PIN_ID, and the security key as inputs.

10. The method of claim 9, further comprising receiving (1040) from the PIN AS a response indicating whether the PIN AS modified the PIN in accordance with the request to modify, wherein the response also indicates that the communication network was involved in authorization of the request to modify.

11. A method performed by an interface function of a communication network to support management of personal Internet-of-Things networks, PINs, the method comprising:
receiving (1110), from a PIN application server, AS, an authorization request related to a request to modify a PIN by a user equipment, UE, configured as a PIN element with management capabilities, PEMC UE, wherein:
the authorization request includes the following: a unique identifier of a PIN element, PINE, to be added or removed from the PIN; and a subscription identifier associated with the PEMC UE's subscription to the communication network; and
the unique identifier is based on the following: a first identifier of the PINE, PINE_ID; an identifier of the PIN, PIN_ID; and a security key known only by the PEMC UE and an authentication server function, AUSF, of the communication network; and
sending (1120), to the AUSF, a verification request that includes the unique identifier of the PINE and the subscription identifier of the PEMC.

12. An application server, AS (560, 660, 1216, 1500) for personal Internet-of-Things networks, PINs, the PIN AS comprising:
communication interface circuitry (1508, 1604) configured to communicate with user equipment configured as PIN elements with management capabilities, PEMC UEs (520, 620, 1212, 1300), and with an interface function (530, 630, 1208, 1400, 1602) of a communication network (198, 200, 500, 600, 1202); and
processing circuitry (1502, 1604) operably coupled to the communication interface circuitry, whereby the processing circuitry and the communication interface circuitry are configured to perform operations corresponding to any of the methods of claims 1-4.

13. An authentication server function, AUSF (540, 640, 1216, 1500) configured for operation in a communication network (198, 200, 500, 600, 1202) and to support management of personal Internet-of-Things networks, PINs, the AUSF comprising:
communication interface circuitry (1406, 1604) configured to communicate with an interface function (530, 630, 1208, 1400, 1602) of the communication network; and
processing circuitry (1402, 1604) operably coupled to the communication interface circuitry, whereby the processing circuitry and the communication interface circuitry are configured to perform operations corresponding to any of the methods of claims 5-7.

14. A user equipment, PEMC UE (520, 620, 1212, 1300) configured with management capabilities for a personal Internet-of-Things network, PIN, the PEMC UE comprising:
communication interface circuitry (1312) configured to communicate with a PIN application server, AS (560, 660, 1216, 1500) via a communication network (198, 200, 500, 600, 1202); and
processing circuitry (1302) operably coupled to the communication interface circuitry, whereby the processing circuitry and the communication interface circuitry are configured to perform operations corresponding to any of the methods of claims 8-10.

15. An interface function (530, 630, 1216, 1500) configured for operation in a communication network (198, 200, 500, 600, 1202) and to support management of personal Internet-of-Things networks, PINs, the interface function comprising:
communication interface circuitry (1406, 1604) configured to communicate with an authentication server function, AUSF (540, 640, 1208, 1400, 1602) of the communication network and with a PIN application server, AS (560, 660, 1216, 1500); and
processing circuitry (1402, 1604) operably coupled to the communication interface circuitry, whereby the processing circuitry and the communication interface circuitry are configured to perform operations corresponding to the method of claim 11.

## Patentansprüche

1. Ein Verfahren für einen Anwendungsserver, AS, für persönliche Internet-der-Dinge-Netzwerke, PINs, wobei das Verfahren Folgendes beinhaltet:
Empfangen (810), von einem Benutzergerät, UE, über ein Kommunikationsnetzwerk, einer Anforderung zum Modifizieren eines PIN, wobei:
das UE als ein PIN-Element mit Verwaltungsfähigkeiten, PEMC-UE, konfiguriert ist;
die Anforderung eine eindeutige Kennung eines PIN-Elements, PINE, und eine Angabe eines PIN-Modifikationstyps umfasst; und
die eindeutige Kennung auf Folgendem basiert: einer ersten Kennung des PINE, PINE_ID; einer Kennung des PIN, PIN_ID; und einem Sicherheitsschlüssel, der nur dem PEMC-UE und einer Authentifizierungsserverfunktion, AUSF, des Kommunikationsnetzwerks bekannt ist;
Senden (820), an eine Schnittstellenfunktion des Kommunikationsnetzwerks, einer Autorisierungsanforderung, die die eindeutige Kennung und eine mit der Anmeldung des PEMC-UE in dem Kommunikationsnetzwerk assoziierte Anmeldungskennung umfasst.

2. Verfahren gemäß Anspruch 1, wobei die eindeutige Kennung des PINE einen Nachrichtenauthentifizierungscode, MAC, beinhaltet, der unter Verwendung von PINE_ID, PIN_ID und des Sicherheitsschlüssels als Eingaben berechnet wird; und/oder wobei:
die eindeutige Kennung des PINE ein Format von PINE_ID:nonce:keyedMAC@PIN_ID aufweist;
nonce ein ganzzahliger Wert ist, der sich mit jeder sukzessiven Anforderung zum Modifizieren durch das PEMC-UE erhöht; und
keyedMAC der MAC ist, der unter Verwendung von PINE_ID, nonce, PIN_ID und des Sicherheitsschlüssels als Eingaben berechnet wird.

3. Verfahren gemäß einem der Ansprüche 1-2, das ferner Folgendes beinhaltet:
Empfangen (830), von der Schnittstellenfunktion, einer Autorisierungsantwort, die Folgendes angibt:
ob PINE_ID einem zulässigen PINE entspricht; und
ob das PEMC-UE autorisiert ist, das PIN gemäß der Anforderung zum Modifizieren zu modifizieren; und
selektives Modifizieren (840) des PIN gemäß der Anforderung zum Modifizieren und der Autorisierungsantwort; und/oder
wobei die Autorisierungsanforderung auch die Angabe des PIN-Modifikationstyps, der eines von Hinzufügen oder Entfernen des PINE ist, umfasst; und/oder
wobei das Verfahren ferner das Senden (850), an das PEMC-UE, einer Antwort beinhaltet, die angibt, ob der PIN-AS das PIN gemäß der Anforderung modifiziert hat, wobei die an das PEMC-UE gesendete Antwort auch angibt, dass das Kommunikationsnetzwerk an der Autorisierung der Anforderung zum Modifizieren beteiligt war.

4. Verfahren gemäß Anspruch 3, wobei das selektive Modifizieren (840) des PIN Folgendes beinhaltet:
Modifizieren (841) des PIN gemäß der Anforderung zum Modifizieren, wenn PINE_ID einem zulässigen PINE entspricht und das PEMC-UE autorisiert ist, das PIN zu modifizieren; und
andernfalls Unterlassen des Modifizierens (842) des PIN gemäß der Anforderung zum Modifizieren.

5. Ein Verfahren, das von einer Authentifizierungsserverfunktion, AUSF, eines Kommunikationsnetzwerks durchgeführt wird, um die Verwaltung persönlicher Internet-der-Dinge-Netzwerke, PINs, zu unterstützen, wobei das Verfahren Folgendes beinhaltet:
Empfangen (910), von einer Schnittstellenfunktion des Kommunikationsnetzwerks, einer Verifikationsanforderung in Bezug auf eine Anforderung zum Modifizieren eines PIN durch ein Benutzergerät, UE, das als ein PIN-Element mit Verwaltungsfähigkeiten, PEMC-UE, konfiguriert ist, wobei:
die Verifikationsanforderung Folgendes umfasst: eine eindeutige Kennung eines PIN-Elements, PINE, das dem PIN hinzugefügt oder von diesem entfernt werden soll, und eine mit der Anmeldung des PEMC-UE in dem Kommunikationsnetzwerk assoziierte Anmeldungskennung; und
die eindeutige Kennung des PINE einen Nachrichtenauthentifizierungscode, keyedMAC, beinhaltet, der von dem PEMC-UE berechnet wird;
Berechnen (920) eines weiteren Nachrichtenauthentifizierungscodes, MAC, auf der Basis des Sicherheitsschlüssels; und
Bestimmen (930) eines Verifikationsergebnisses auf der Basis des weiteren MAC, der eindeutigen Kennung und der Anmeldungskennung, wobei das Verifikationsergebnis Folgendes angibt:
ob eine in der eindeutigen Kennung umfasste erste Kennung einem zulässigen PINE entspricht; und
ob das PEMC-UE autorisiert ist, das PIN gemäß der Anforderung zum Modifizieren zu modifizieren.

6. Verfahren gemäß Anspruch 5, wobei:
die eindeutige Kennung des PINE ein Format von PINE_ID:nonce:keyedMAC@PIN_ID aufweist;
nonce ein ganzzahliger Wert ist, der sich mit jeder sukzessiven Anforderung zum Modifizieren durch das PEMC-UE erhöht;
PINE_ID die erste Kennung ist; und
PIN_ID eine Kennung des PIN ist; und/oder
wobei der weitere MAC unter Verwendung von PINE_ID, nonce, PIN_ID und des Sicherheitsschlüssels als Eingaben berechnet wird.

7. Verfahren gemäß Anspruch 6, wobei das Bestimmen (930) des Verifikationsergebnisses Folgendes beinhaltet:
Vergleichen (931) des weiteren MAC mit dem keyedMAC; und
Bestimmen (932), dass PINE_ID einem zulässigen PINE entspricht und dass das PINE autorisiert ist, dem PINE hinzugefügt oder von diesem entfernt zu werden, nur dann,
wenn der weitere MAC mit dem keyedMAC übereinstimmt.

8. Ein Verfahren, das von einem Benutzergerät, PEMC-UE, das mit Verwaltungsfähigkeiten für ein persönliches Internet-der-Dinge-Netzwerk, PIN, konfiguriert ist, durchgeführt wird, wobei das Verfahren Folgendes beinhaltet:
Berechnen (1020) einer eindeutigen Kennung für ein PIN-Element, PINE, das dem PIN hinzugefügt oder von diesem entfernt werden soll, wobei die eindeutige Kennung auf der Basis von Folgendem berechnet wird: einer ersten Kennung des PINE, PINE_ID;
einer Kennung des PIN, PIN_ID; und einem Sicherheitsschlüssel, der nur dem PEMC-UE und einer Authentifizierungsserverfunktion, AUSF, eines Kommunikationsnetzwerks bekannt ist; und
Senden (1030) einer Anforderung zum Modifizieren des PIN an einen PIN-Anwendungsserver, PIN-AS, über das Kommunikationsnetzwerk, wobei die Anforderung die eindeutige Kennung des PINE und eine Angabe eines PIN-Modifikationstyps, der eines von Hinzufügen oder Entfernen des PINE ist, umfasst.

9. Verfahren gemäß Anspruch 8, wobei die eindeutige Kennung des PINE einen Nachrichtenauthentifizierungscode beinhaltet, der unter Verwendung von PINE_ID, PIN_ID und des Sicherheitsschlüssels als Eingaben berechnet wird; und/oder wobei:
die eindeutige Kennung des PINE ein Format von PINE_ID:nonce:keyedMAC@PIN_ID aufweist;
nonce ein ganzzahliger Wert ist, der sich mit jeder sukzessiven Anforderung zum Modifizieren durch das PEMC-UE erhöht; und
keyedMAC der MAC ist, der unter Verwendung von PINE_ID, nonce, PIN_ID und des Sicherheitsschlüssels als Eingaben berechnet wird.

10. Verfahren gemäß Anspruch 9, das ferner das Empfangen (1040), von dem PIN-AS, einer Antwort beinhaltet, die angibt, ob der PIN-AS das PIN gemäß der Anforderung zum Modifizieren modifiziert hat, wobei die Antwort auch angibt, dass das Kommunikationsnetzwerk an der Autorisierung der Anforderung zum Modifizieren beteiligt war.

11. Ein Verfahren, das von einer Schnittstellenfunktion eines Kommunikationsnetzwerks durchgeführt wird, um die Verwaltung persönlicher Internet-der-Dinge-Netzwerke, PINs, zu unterstützen, wobei das Verfahren Folgendes beinhaltet:
Empfangen (1110), von einem PIN-Anwendungsserver, PIN-AS, einer Autorisierungsanforderung in Bezug auf eine Anforderung zum Modifizieren eines PIN durch ein Benutzergerät, UE, das als ein PIN-Element mit Verwaltungsfähigkeiten, PEMC-UE, konfiguriert ist, wobei:
die Autorisierungsanforderung Folgendes umfasst: eine eindeutige Kennung eines PIN-Elements, PINE, das dem PIN hinzugefügt oder von diesem entfernt werden soll; und eine mit der Anmeldung des PEMC-UE in dem Kommunikationsnetzwerk assoziierte Anmeldungskennung; und
die eindeutige Kennung auf Folgendem basiert: einer ersten Kennung des PINE, PINE_ID; einer Kennung des PIN, PIN_ID; und einem Sicherheitsschlüssel, der nur dem PEMC-UE und einer Authentifizierungsserverfunktion, AUSF, des Kommunikationsnetzwerks bekannt ist; und
Senden (1120), an die AUSF, einer Verifikationsanforderung, die die eindeutige Kennung des PINE und die Anmeldungskennung des PEMC umfasst.

12. Ein Anwendungsserver, AS (560, 660, 1216, 1500) für persönliche Internet-der-Dinge-Netzwerke, PINs, wobei der PIN-AS Folgendes beinhaltet:
eine Kommunikationsschnittstellenschaltung (1508, 1604), die konfiguriert ist, um mit Benutzergeräten, die als PIN-Elemente mit Verwaltungsfähigkeiten, PEMC-UEs, (520, 620, 1212, 1300) konfiguriert sind, und mit einer Schnittstellenfunktion (530, 630, 1208, 1400, 1602) eines Kommunikationsnetzwerks (198, 200, 500, 600, 1202) zu kommunizieren; und
eine Verarbeitungsschaltung (1502, 1604), die betriebsfähig mit der Kommunikationsschnittstellenschaltung gekoppelt ist, wobei die Verarbeitungsschaltung und die Kommunikationsschnittstellenschaltung konfiguriert sind, um Operationen durchzuführen, die einem der Verfahren gemäß den Ansprüchen 1-4 entsprechen.

13. Eine Authentifizierungsserverfunktion, AUSF, (540, 640, 1216, 1500), die für den Betrieb in einem Kommunikationsnetzwerk (198, 200, 500, 600, 1202) und zur Unterstützung der Verwaltung persönlicher Internet-der-Dinge-Netzwerke, PINs, konfiguriert ist, wobei die AUSF Folgendes beinhaltet:
eine Kommunikationsschnittstellenschaltung (1406, 1604), die konfiguriert ist, um mit einer Schnittstellenfunktion (530, 630, 1208, 1400, 1602) des Kommunikationsnetzwerks zu kommunizieren; und
eine Verarbeitungsschaltung (1402, 1604), die betriebsfähig mit der Kommunikationsschnittstellenschaltung gekoppelt ist, wobei die Verarbeitungsschaltung und die Kommunikationsschnittstellenschaltung konfiguriert sind, um Operationen durchzuführen, die einem der Verfahren gemäß den Ansprüchen 5-7 entsprechen.

14. Ein Benutzergerät, PEMC-UE, (520, 620, 1212, 1300), das mit Verwaltungsfähigkeiten für ein persönliches Internet-der-Dinge-Netzwerk, PIN, konfiguriert ist, wobei das PEMC-UE Folgendes beinhaltet:
eine Kommunikationsschnittstellenschaltung (1312), die konfiguriert ist, um mit einem PIN-Anwendungsserver, PIN-AS, (560, 660, 1216, 1500) über ein Kommunikationsnetzwerk (198, 200, 500, 600, 1202) zu kommunizieren; und
eine Verarbeitungsschaltung (1302), die betriebsfähig mit der Kommunikationsschnittstellenschaltung gekoppelt ist, wobei die Verarbeitungsschaltung und die Kommunikationsschnittstellenschaltung konfiguriert sind, um Operationen durchzuführen, die einem der Verfahren gemäß den Ansprüchen 8-10 entsprechen.

15. Eine Schnittstellenfunktion (530, 630, 1216, 1500), die für den Betrieb in einem Kommunikationsnetzwerk (198, 200, 500, 600, 1202) und zur Unterstützung der Verwaltung persönlicher Internet-der-Dinge-Netzwerke, PINs, konfiguriert ist, wobei die Schnittstellenfunktion Folgendes beinhaltet:
eine Kommunikationsschnittstellenschaltung (1406, 1604), die konfiguriert ist, um mit einer Authentifizierungsserverfunktion, AUSF, (540, 640, 1208, 1400, 1602) des Kommunikationsnetzwerks und mit einem PIN-Anwendungsserver, PIN-AS, (560, 660, 1216, 1500) zu kommunizieren; und
eine Verarbeitungsschaltung (1402, 1604), die betriebsfähig mit der Kommunikationsschnittstellenschaltung gekoppelt ist, wobei die Verarbeitungsschaltung und die Kommunikationsschnittstellenschaltung konfiguriert sind, um Operationen durchzuführen, die dem Verfahren gemäß Anspruch 11 entsprechen.

## Revendications

1. Un procédé pour un serveur d'application, AS, pour des réseaux personnels de l'Internet des objets, PIN, le procédé comprenant :
la réception (810), en provenance d'un équipement utilisateur, UE, par l'intermédiaire d'un réseau de communication, d'une demande de modification d'un PIN, dans lequel :
l'UE est configuré comme élément PIN avec des capacités de gestion, UE PEMC ;
la demande inclut un identifiant unique d'un élément PIN, PINE, et une indication d'un type de modification de PIN ; et
l'identifiant unique est basé sur ce qui suit : un premier identifiant du PINE, PINE_ID ; un identifiant du PIN, PIN_ID ; et une clé de sécurité connue uniquement par l'UE PEMC et une fonction de serveur d'authentification, AUSF, du réseau de communication ;
l'envoi (820), à une fonction d'interface du réseau de communication, d'une demande d'autorisation qui inclut l'identifiant unique et un identifiant d'abonnement associé à l'abonnement de l'UE PEMC au réseau de communication.

2. Le procédé de la revendication 1, dans lequel l'identifiant unique du PINE comprend un code d'authentification de message, MAC, calculé en utilisant le PINE_ID, le PIN_ID, et la clé de sécurité comme entrées ; et/ou dans lequel :
l'identifiant unique du PINE a un format de PINE_ID:nonce:keyedMAC@PIN_ID ;
nonce est une valeur entière qui augmente avec chaque demande successive de modification par l'UE PEMC ; et
keyedMAC est le MAC calculé en utilisant le PINE_ID, le nonce, le PIN_ID, et la clé de sécurité comme entrées.

3. Le procédé de n'importe lesquelles des revendications 1 à 2, comprenant en outre :
la réception (830), en provenance de la fonction d'interface, d'une réponse d'autorisation indiquant ce qui suit :
si le PINE_ID correspond à un PINE légitime ; et
si l'UE PEMC est autorisé à modifier le PIN conformément à la demande de modification ; et
la modification sélective (840) du PIN conformément à la demande de modification et à la réponse d'autorisation ; et/ou
dans lequel la demande d'autorisation inclut également l'indication du type de modification de PIN, qui est l'un d'entre l'ajout ou la suppression du PINE ; et/ou
le procédé comprenant en outre l'envoi (850) à l'UE PEMC d'une réponse indiquant si l'AS PIN a modifié le PIN conformément à la demande, dans lequel la réponse envoyée à l'UE PEMC indique également que le réseau de communication a été impliqué dans l'autorisation de la demande de modification.

4. Le procédé de la revendication 3, dans lequel la modification sélective (840) du PIN comprend :
la modification (841) du PIN conformément à la demande de modification, lorsque le PINE_ID correspond à un PINE légitime et que l'UE PEMC est autorisé à modifier le PIN ; et
sinon le fait de s'abstenir de modifier (842) le PIN conformément à la demande de modification.

5. Un procédé réalisé par une fonction de serveur d'authentification, AUSF, d'un réseau de communication pour prendre en charge la gestion de réseaux personnels de l'Internet des objets, PIN, le procédé comprenant :
la réception (910), en provenance d'une fonction d'interface du réseau de communication, d'une demande de vérification relative à une demande de modification d'un PIN par un équipement utilisateur, UE, configuré comme élément PIN avec des capacités de gestion, UE PEMC, dans lequel :
la demande de vérification inclut ce qui suit : un identifiant unique d'un élément PIN, PINE, à ajouter ou à supprimer du PIN, et un identifiant d'abonnement associé à l'abonnement de l'UE PEMC au réseau de communication ; et
l'identifiant unique du PINE comprend un code d'authentification de message, keyedMAC, calculé par l'UE PEMC ;
le calcul (920) d'un code d'authentification de message, MAC, supplémentaire sur la base de la clé de sécurité ; et
la détermination (930) d'un résultat de vérification sur la base du MAC supplémentaire, de l'identifiant unique, et de l'identifiant d'abonnement, le résultat de vérification indiquant ce qui suit :
si un premier identifiant inclus dans l'identifiant unique correspond à un PINE légitime ; et
si l'UE PEMC est autorisé à modifier le PIN conformément à la demande de modification.

6. Le procédé de la revendication 5, dans lequel :
l'identifiant unique du PINE a un format de PINE_ID:nonce:keyedMAC@PIN_ID ;
nonce est une valeur entière qui augmente avec chaque demande successive de modification par l'UE PEMC ;
PINE_ID est le premier identifiant ; et
PIN_ID est un identifiant du PIN ; et/ou
dans lequel le MAC supplémentaire est calculé en utilisant le PINE_ID, le nonce, le PIN_ID, et la clé de sécurité comme entrées.

7. Le procédé de la revendication 6, dans lequel la détermination (930) du résultat de vérification comprend :
la comparaison (931) du MAC supplémentaire au keyedMAC ; et
la détermination (932) que le PINE_ID correspond à un PINE légitime et que le PINE est autorisé à être ajouté ou supprimé du PINE uniquement lorsque le MAC supplémentaire concorde avec le keyedMAC.

8. Un procédé réalisé par un équipement utilisateur, UE PEMC, configuré avec des capacités de gestion pour un réseau personnel de l'Internet des objets, PIN, le procédé comprenant :
le calcul (1020) d'un identifiant unique pour un élément PIN, PINE, à ajouter au ou à supprimer du PIN, l'identifiant unique étant calculé sur la base de ce qui suit : un premier identifiant du PINE, PINE_ID ; un identifiant du PIN, PIN_ID ; et une clé de sécurité connue uniquement par l'UE PEMC et une fonction de serveur d'authentification, AUSF, d'un réseau de communication ; et
l'envoi (1030) d'une demande de modification du PIN à un serveur d'application, AS, de PIN par l'intermédiaire du réseau de communication, la demande incluant l'identifiant unique du PINE et une indication d'un type de modification de PIN, qui est l'un d'entre l'ajout ou la suppression du PINE.

9. Le procédé de la revendication 8, dans lequel l'identifiant unique du PINE comprend un code d'authentification de message calculé en utilisant le PINE_ID, le PIN_ID, et la clé de sécurité comme entrées ; et/ou dans lequel :
l'identifiant unique du PINE a un format de PINE_ID:nonce:keyedMAC@PIN_ID ;
nonce est une valeur entière qui augmente avec chaque demande successive de modification par l'UE PEMC ; et
keyedMAC est le MAC calculé en utilisant le PINE_ID, le nonce, le PIN_ID, et la clé de sécurité comme entrées.

10. Le procédé de la revendication 9, comprenant en outre la réception (1040) en provenance de l'AS PIN d'une réponse indiquant si l'AS PIN a modifié le PIN conformément à la demande de modification, la réponse indiquant également que le réseau de communication a été impliqué dans l'autorisation de la demande de modification.

11. Un procédé réalisé par une fonction d'interface d'un réseau de communication pour prendre en charge la gestion de réseaux personnels de l'Internet des objets, PIN, le procédé comprenant :
la réception (1110), en provenance d'un serveur d'application, AS, PIN, d'une demande d'autorisation relative à une demande de modification d'un PIN par un équipement utilisateur, UE, configuré comme élément PIN avec des capacités de gestion, UE PEMC, dans lequel :
la demande d'autorisation inclut ce qui suit : un identifiant unique d'un élément PIN, PINE, à ajouter ou à supprimer du PIN ; et un identifiant d'abonnement associé à l'abonnement de l'UE PEMC au réseau de communication ; et
l'identifiant unique est basé sur ce qui suit : un premier identifiant du PINE, PINE_ID ; un identifiant du PIN, PIN_ID ; et une clé de sécurité connue uniquement par l'UE PEMC et une fonction de serveur d'authentification, AUSF, du réseau de communication ; et
l'envoi (1120), à l'AUSF, d'une demande de vérification qui inclut l'identifiant unique du PINE et l'identifiant d'abonnement du PEMC.

12. Un serveur d'application, AS (560, 660, 1216, 1500) pour des réseaux personnels de l'Internet des objets, PIN, l'AS PIN comprenant :
une circuiterie d'interface de communication (1508, 1604) configurée pour communiquer avec un équipement utilisateur configuré comme éléments PIN avec des capacités de gestion, UE PEMC (520, 620, 1212, 1300), et avec une fonction d'interface (530, 630, 1208, 1400, 1602) d'un réseau de communication (198, 200, 500, 600, 1202) ; et
une circuiterie de traitement (1502, 1604) couplée de manière fonctionnelle à la circuiterie d'interface de communication, moyennant quoi la circuiterie de traitement et la circuiterie d'interface de communication sont configurées pour réaliser des opérations correspondant à n'importe lesquels des procédés des revendications 1 à 4.

13. Une fonction de serveur d'authentification, AUSF (540, 640, 1216, 1500) configurée pour un fonctionnement dans un réseau de communication (198, 200, 500, 600, 1202) et pour prendre en charge la gestion de réseaux personnels de l'Internet des objets, PIN, l'AUSF comprenant :
une circuiterie d'interface de communication (1406, 1604) configurée pour communiquer avec une fonction d'interface (530, 630, 1208, 1400, 1602) du réseau de communication ; et
une circuiterie de traitement (1402, 1604) couplée de manière fonctionnelle à la circuiterie d'interface de communication, moyennant quoi la circuiterie de traitement et la circuiterie d'interface de communication sont configurées pour réaliser des opérations correspondant à n'importe lesquels des procédés des revendications 5 à 7.

14. Un équipement utilisateur, UE PEMC (520, 620, 1212, 1300) configuré avec des capacités de gestion pour un réseau personnel de l'Internet des objets, PIN, l'UE PEMC comprenant :
une circuiterie d'interface de communication (1312) configurée pour communiquer avec un serveur d'application, AS, PIN (560, 660, 1216, 1500) par l'intermédiaire d'un réseau de communication (198, 200, 500, 600, 1202) ; et
une circuiterie de traitement (1302) couplée de manière fonctionnelle à la circuiterie d'interface de communication, moyennant quoi la circuiterie de traitement et la circuiterie d'interface de communication sont configurées pour réaliser des opérations correspondant à n'importe lesquels des procédés des revendications 8 à 10.

15. Une fonction d'interface (530, 630, 1216, 1500) configurée pour un fonctionnement dans un réseau de communication (198, 200, 500, 600, 1202) et pour prendre en charge la gestion de réseaux personnels de l'Internet des objets, PIN, la fonction d'interface comprenant :
une circuiterie d'interface de communication (1406, 1604) configurée pour communiquer avec une fonction de serveur d'authentification, AUSF (540, 640, 1208, 1400, 1602) du réseau de communication et avec un serveur d'application, AS, PIN (560, 660, 1216, 1500) ; et
une circuiterie de traitement (1402, 1604) couplée de manière fonctionnelle à la circuiterie d'interface de communication, moyennant quoi la circuiterie de traitement et
la circuiterie d'interface de communication sont configurées pour réaliser des opérations correspondant au procédé de la revendication 11.
